(19) Europäisches Patentamt
European Patent Office
Office européen des brevets

(11) **EP 2 960 166 B1**

(12) **EUROPEAN PATENT SPECIFICATION**

(45) Date of publication and mention of the grant of the patent:
**14.03.2018 Bulletin 2018/11**

(21) Application number: **14795035.6**

(22) Date of filing: **08.05.2014**

(51) Int Cl.:
**B65B 33/04** (2006.01)    **B60J 1/20** (2006.01)

(86) International application number:
**PCT/JP2014/062405**

(87) International publication number:
**WO 2014/181844 (13.11.2014 Gazette 2014/46)**

(54) **GLASS PROTECTIVE PRESSURE-SENSITIVE ADHESIVE SHEET APPICATION METHOD**

AUFBRINGUNGSVERFAHREN FÜR EINE GLASSCHÜTZENDE, DRUCKEMPFINDLICHE KLEBEFOLIE

PROCEDE D'APPLICATION D'UNE FEUILLE ADHESIVE SENSIBLE A LA PRESSION POUR LA PROTECTION DU VERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2013 JP 2013098876**

(43) Date of publication of application:
**30.12.2015 Bulletin 2015/53**

(73) Proprietor: **Nitto Denko Corporation**
**Ibaraki-shi, Osaka 567-8680 (JP)**

(72) Inventors:
• **IGARASHI, Takeshi**
**Ibaraki-shi**
**Osaka 567-8680 (JP)**
• **SUZUKI, Toshitaka**
**Ibaraki-shi**
**Osaka 567-8680 (JP)**
• **WAKAYAMA, Nao**
**Ibaraki-shi**
**Osaka 567-8680 (JP)**
• **DEGAWA, Osamu**
**Ibaraki-shi**
**Osaka 567-8680 (JP)**
• **KANEZAKI, Takuro**
**Ibaraki-shi**
**Osaka 567-8680 (JP)**
• **KATO, Masakazu**
**Ibaraki-shi**
**Osaka 567-8680 (JP)**

(74) Representative: **Grünecker Patent- und**
**Rechtsanwälte**
**PartG mbB**
**Leopoldstraße 4**
**80802 München (DE)**

(56) References cited:
EP-A1- 2 426 054       WO-A1-99/28400
WO-A1-2012/105413      JP-A- H07 216 326
JP-A- H10 114 885      JP-A- 407 081 959
JP-A- 2010 121 044     JP-U- 3 190 322

**Description**

[Technical Field]

The present invention relates to a method for applying a glass protective pressure-sensitive adhesive (PSA) sheet. In particular, it relates to a method for applying a glass protective PSA sheet to automobile glass window.
The present application claims priority to Japanese Patent Application No. 2013-098876 filed on May 8, 2013.

[Background Art]

In the course of storage and distribution of automobiles, etc., to protect their exterior paint films (coatings) from damage, dirt collection, etc., a technique of applying coating protection sheets to paint films is known. A coating protection sheet used for such a purpose is generally constructed to comprise a non-porous plastic film (substrate) and a PSA layer provided to one face thereof and to be adhered via the PSA layer to a coated surface of an automobile to achieve the protection purpose.
Similarly to the paint films, glass windows of automobiles are exposed to the outside of the automobiles and may suffer damage, etc., in the course of storage, distribution and so on. For instance, while an automobile is being transported, its glass windows may get partially scratched or cracked when hit by a pebble kicked up off the road (flying pebble), etc. Scratches and cracks in an automobile glass window are likely to result in significant additional work and costs as they require a complete replacement of the glass window. Thus, lately, in the course of storage and distribution of automobiles, etc., there is increasing demand for protective materials to protect glass windows of the automobiles. Technical literatures related to PSA sheets that are applied to the outer surfaces of automobile glass windows for their protection include Patent Documents 1 to 3.
WO 99/28400 A1 discloses a protective film for windscreens of vehicles. JP 407 081 959 A discloses a glass sheet cutting method to cut a glass sheet having a protective film.

[Citation List]

[Patent Literature]

[Patent Document 1] Japanese Patent Application Publication No. 2007-84795
[Patent Document 2] Japanese Patent Application Publication No. 2007-246589
[Patent Document 3] Japanese Patent Application Publication No. 2010-121044

[Summary of Invention]

[Technical Problem]

Despite of such demand, glass protective PSA sheets have not been widely used yet in the course of storage and distribution of automobiles, etc. One of the causes for this may be that it is generally difficult to properly apply PSA sheets to front and rear windshields of automobiles because of their complex three-dimensional shapes or that the work for proper application requires time and effort. Improper application of a glass protective PSA sheet may cause problems such as the PSA sheet getting fanned away by wind from the automobile after its application to result in failure of essential purpose of protection, entering of rain from wrinkles formed during the application and leaving marks on the glass window to decrease the product value, and so on.
The present invention has been made under such circumstances. An objective thereof is to provide a method for applying a glass protective PSA sheet properly and efficiently to an outer surface of an automobile glass window. Another related objective is to provide a glass protective PSA sheet suited to practicing the glass protective PSA sheet application method.

[Solution to Problem]

The invention provides a method for applying a glass protective pressure-sensitive adhesive sheet to an outer surface of an automobile glass window according to claim 1 and an automobile glass window according to claim 10. This description provides a method for applying a glass protective PSA sheet to an outer surface of an automobile glass window. In the method, as the glass protective PSA sheet, an edge sheet piece (edge piece) and a center sheet piece (center piece) are used. The method may comprise obtaining (fabricating, purchasing, and so on) the edge piece and the center piece. The method comprises a step of applying the edge piece to the periphery of the automobile glass window and a step of applying the center piece over the edge piece. In the step of applying the center piece, outer margins of the center piece are laid over inner margins of the edge piece when applied.

In the application method, as the glass protective PSA sheet, the center piece and the edge piece are used in combination. Applying the center piece and edge piece separately as the glass protective PSA sheet may facilitate proper application that allows the respective pieces to conform to the outer surface contours of the glass window. Easier application of the glass protective PSA sheet may reduce the labor time needed for the application. Accordingly, the application method allows proper application of the glass protective PSA sheet in less time.

The center piece is preferably formed in a single piece. Covering the central area of the glass window with a single (one-piece) center piece will surely prevent rain from entering the central area and further, to a great extent, from leaving water marks on the central area. The glass window's central area readily comes into the sight of a user of the automobile and has a great impact on the product value. Thus, it is particularly meaningful to be able to effectively prevent formation of water marks in the central area.

The center piece preferably has a surface area equivalent to 95 % or less of the surface area of the glass window's outer surface. In other words, the center piece preferably yields a glass window coverage Rc of 95 % or lower. The glass window coverage being at or below 95 % may facilitate proper application of the center piece. In the method disclosed herein, because the center piece and edge piece are used in combination, even when the glass window coverage Rc by the center piece is reduced to 95 % or below, the glass protective PSA sheet as a whole covers a surface area larger than 95 %, whereby it can produce sufficient protective performance.

The edge piece is applied to the periphery along at least one side of the edges (outer edges) of the glass window. As the edge piece, a single PSA sheet piece may be used, or two or more PSA sheet pieces may be used in combination. When two or more PSA sheet pieces are used as the edge piece, the shapes of the respective PSA sheet pieces may conform to one side of the glass window edges or to two or more adjacent sides thereof. For instance, in a preferable embodiment, a single edge piece that has a shape conforming to any one side of the glass window edges, or two, three or four edge pieces having shapes conforming to the respective sides of the glass window edges are used in combination.

The edge piece preferably has a width of 300 mm or smaller. The periphery of an automobile glass window is often curved more sharply (has larger curvatures) than the central area. A small width of the edge piece applied to such a periphery facilitates proper application of the edge piece. This can effectively reduce the labor time needed for proper application of the glass protective PSA sheet.

The center piece preferably comprises a projection (a convex curve segment) where the center piece's outline partially projects outwards to one lateral side of the glass window. In general, the periphery (lateral areas) along the right and left sides of an automobile glass window are often greatly curved as compared with the central portion of the glass window. The projection of the center piece can be applied easily and properly even to such a lateral area. Accordingly, with the inclusion of such a projection, a section (the projection) of the center piece can be applied at a position closer to the side of the glass window without greatly impairing the ease of application of the center piece. This is particularly meaningful when a glass window to which a wiper is applied is the object of protection (object of application).

In a preferable embodiment of the art disclosed herein, the center piece comprises two or more projections spaced at intervals, typically side by side, where the outline of the center piece partially projects outwards to one lateral side of the glass window. In a center piece having such a shape, between two adjacent projections of the two or more projections, there is formed an indentation (a concave segment) where the outline of the center piece partially recesses inward away from the one lateral side of the glass window. The indentation can be used to release (absorb) distortion possibly occurring when the center piece is made to conform to the surface contours of the glass window. This may prevent wrinkle formation and facilitate proper application of the center piece.

In the art disclosed herein, a preferable center piece comprises an indentation (recession) having a depth of 50 mm or greater between two adjacent projections of the two or more projections. Herein, the depth of an indentation refers to the distance $L_D$ from a line connecting the top points of the two projections located on the respective sides of the indentation to the line running in parallel to the first line through the bottom point of the indentation. According to a center piece having an indentation having such a depth, greater distortion release effect can be produced. When the center piece is applied to a glass window to which a wiper is applied as described later, the indentation depth $L_D$ being at least 50 mm is particularly significant.

In general, an automobile comprises a wiper to wipe off deposits (water, dirt, etc.) from the glass window surface. The wiper comprises a blade that moves back and forth along the glass window surface in a predesignated wiping area. A typical automobile comprises a wiper to wipe a surface of at least a front glass window (or a front windshield, hereinafter). In addition to the wiper applied to the front windshield, some automobiles comprise wipers applied to other glass windows such as rear glass windows (rear windshields), etc. The glass protective PSA sheet application method disclosed herein is preferable as a method for applying a glass protective PSA sheet to such a glass window to which a wiper is applied. In the application method, outer margins of the center piece are applied over inner margins of the edge piece; and therefore, even if the wiper is operated after the application, the blade is unlikely to get caught on the inner rim of the edge piece. Thus, even if the wiper is operated, peeling or kinking of the glass protective PSA sheet is unlikely to occur and good protective performance can be maintained.

When the object to which the glass protective PSA sheet application method disclosed herein is applied (i.e. the object of application of the glass protective PSA sheet) is a glass window to which a wiper is applied, a piece having the projection(s) can be preferable used as the center piece. In this case, the center piece is preferably applied in such a way that the blade will be placed to intersect the projection(s) at a position (a closest-to-lateral-side position) where the blade comes closest to a lateral side of the glass window. In general, the closest-to-lateral-side position may be at the reversing position of the blade in the back and forth motion. Thus, at the closest-to-lateral-side position, the blade tends to apply greater load on the glass protective PSA sheet. With the blade being supported at the closest-to-lateral-side position over the projection(s) of the center piece, the load applied by the blade on the edge piece may be reduced. Thus, peeling and kinking of the edge piece can be prevented and good protective performance can be maintained.

In the glass protective PSA sheet application method according to a preferable embodiment, a center piece comprising two or more projections spaced at intervals is used, and the center piece is applied so that the blade will be placed across the two or more projections (and intersecting the indentation(s)) at the closest-to-lateral-side position. According to such an embodiment, with the two or more projections, the blade at the closest-to-lateral-side position can be supported more stably. Thus, the load applied by the blade on the edge piece can be effectively reduced.

When a glass window to which a wiper is applied is the object of application in the glass protective PSA sheet application method disclosed herein, in the step of applying the center piece, it is preferable to apply the center piece so that the blade is always at least partially on the center piece in the wiping area. This can reduce the load applied by the blade on the glass protective PSA sheet and prevent the PSA sheet from peeling and kinking, whereby good protective performance can be maintained.

A preferable center piece used in the glass protective PSA sheet application method disclosed herein preferably has a haze value of 10 % or lower. This is because in the course of storage and distribution of automobiles, etc., some are transported by actually driving them. According to a center piece satisfying the haze value, proper visibility can be ensured even in transporting an automobile by driving it while the automobile is in a state where the glass protective PSA sheet has been applied to its glass windows. It is more preferable to use a center piece and an edge piece each having a haze value of 10 % or lower.

This description provides a glass protective PSA sheet used in a glass protective PSA sheet application method disclosed herein. Such a glass protective PSA sheet can be applied to an automobile glass window by a method disclosed herein to properly protect the glass window.

[Brief Description of Drawings]

Fig. 1 shows a schematic plan view of a main part of an automobile that comprises a front windshield having a glass protective PSA sheet applied by the glass protective PSA sheet application method of a first embodiment.
Fig. 2 shows a schematic plan view illustrating the glass protective PSA sheet application method of the first embodiment.
Fig. 3 shows a schematic plan view illustrating the glass protective PSA sheet application method of the first embodiment.
Fig. 4 shows a schematic cross-sectional view at line IV-IV in Fig. 1.
Fig. 5 shows, with respect to the glass protective PSA sheet application method of the first embodiment, a schematic plan view illustrating the positional relationship between the blade at the closest-to-lateral-side position WR1 and the glass protective PSA sheet.
Fig. 6 shows a schematic plan view of a front windshield having a glass protective PSA sheet applied by the glass protective PSA sheet application method of a second embodiment.
Fig. 7 shows a schematic plan view of a rear windshield having a glass protective PSA sheet applied by the glass protective PSA sheet application method of a third embodiment.
Fig. 8 shows a schematic cross-sectional view of an example of the construction of the glass protective PSA sheet.
Fig. 9 shows a schematic cross-sectional view of another example of the construction of the glass protective PSA sheet.

[Description of Embodiments]

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.

In the drawings referenced below, a common reference numeral may be assigned to members or sites producing the same effects, and duplicated descriptions are sometimes omitted or simplified. The embodiments described in the drawings are schematized as necessary for clear illustration of the present invention, and do not necessarily represent the accurate dimensions or reduction scales of the glass-protective PSA sheet for actual use.

In the glass protective PSA sheet application method disclosed herein, as the glass protective PSA sheet applied to an automobile glass window (i.e. the object of protection), a center piece to cover a central area of the glass window and an edge piece to cover the periphery of the glass window are used in combination. When the glass protective PSA sheet is applied, the automobile glass window can be in a state installed already in the automobile body or in a state prior to installation. In other words, the glass protective PSA sheet application method disclosed herein may be applied to a glass window installed in an automobile as a final product or in the manufacturing process, or to an automobile glass window before installed in an automobile.

In this description, the central area of an automobile glass window refers to the area inside a circle that is centered at the intersection between the center line of the width direction and the center line of the height direction of the glass window and has a diameter equivalent to 30 % of the length of whichever is shorter between the center line of the width direction and the center line of the height direction. Herein, the width direction and height direction of a glass window refer to the directions based on the position (orientation) of the glass window installed in an automobile. The length of the center line of the width direction refers to the length of a segment of the center line of the width direction defined by the edges of the glass window. Similarly, the length of the center line of the height direction of the glass window refers to the length of a segment of the center line defined by the edges of the glass window. Hereinafter, when the glass window is installed in an automobile, the side that comes at the top (roof-side) is referred to as the upper side while the side at the bottom (base-side) is referred to as the lower side. When looked at from the outer surface side of the glass window, the side on the right may be referred to as the right side (right lateral) and the side on the left may be referred to as the left side (left lateral). In the art disclosed herein, the center piece is applied to entirely cover at least the central area. The center piece can be applied to further cover an area outside the central area in the glass window. For instance, the center piece can be applied so that a part of it covers a part of the periphery of the glass window.

In this description, the periphery of an automobile glass window refers to a frame-shaped (ring-like) area along edges of the automobile glass window, with the frame-shaped area having a width equivalent to 10 % of the length of whichever is shorter between the center line of the width direction and the center line of the height direction of the glass window. The edge piece in the art disclosed herein is applied to the glass window to cover at least a part of the periphery. The edge piece may be applied to the glass window to cover an area inside the periphery (on the central area side). It is, however, preferable to apply the edge piece not to cover the central area. In other words, the edge piece is preferably applied to the glass window so that its inner edges (its edges on the central area side of the glass window) are located outside the central area.

In this description, the edges (outer edges) of an automobile glass window refer to the edges (limits) of in-plane directions in the area where the glass window's outer surface is exposed to the outside. Thus, for instance, in a glass window equipped with a window molding around its perimeter for installation in an automobile, the edges of the glass window are the line segments dividing the area integrated in the window molding and the area exposed outside the window molding in the outer surface of the glass window.

In this description, the surface area of the outer surface of an automobile glass window refers to the exposed area of the outer surface when the glass window is in a state that it is installed in an automobile, but a protective sheet is not yet applied. In other words, in the surface area of the glass window, it refers to the surface area of the inner region surrounded by the edges (limits). Hereinafter, the surface area of the glass window's outer surface may be referred to as simply the "surface area of the glass window."

In this description, to properly apply a PSA sheet to an automobile glass window means to bring about a state of adhesion suitable for producing protective performance on the glass window. For instance, in bringing about the state of adhesion, it is effective to reduce the number and extent (lengths, etc.) of wrinkles that may be formed while applying the PSA sheet.

By applying the glass protective PSA sheet application method disclosed herein to an automobile glass window, a glass protective PSA sheet-covered glass window can be obtained. When the glass window is of a finished automobile, by practicing the application method, an automobile having a glass protective PSA sheet-covered glass window can be obtained. Likewise, when the glass window is not yet installed in an automobile or installed in an unfinished automobile, by finishing the automobile after practicing the application method, an automobile having a glass protective PSA sheet-covered glass window can be obtained. Accordingly, in another aspect of the glass protective PSA sheet application method disclosed herein, a glass protective PSA sheet-covered glass window and a method for producing the same as well as an automobile having a glass protective PSA sheet-covered glass window and a method for producing the same are provided.

Preferable examples of the glass protective PSA sheet application method disclosed herein are described below in reference to drawings.

(First Embodiment)

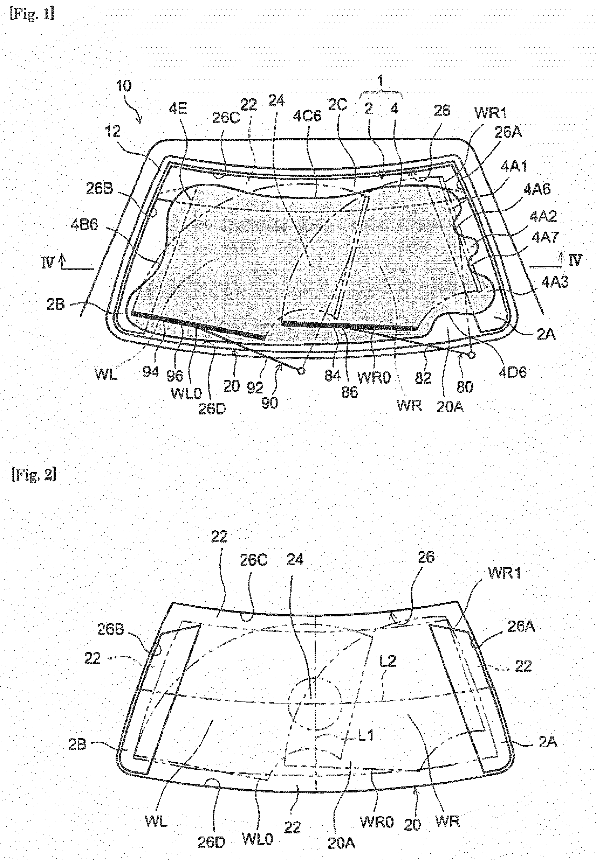

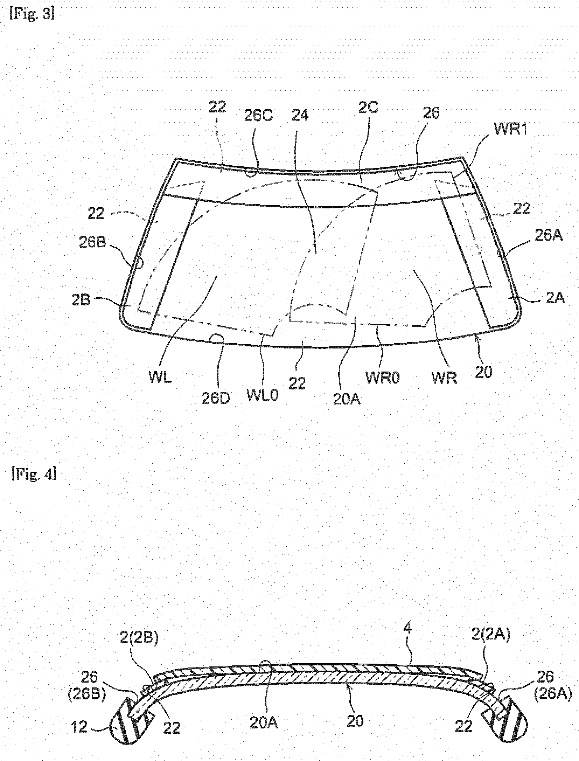

Fig. 1 shows a schematic plan view of a main part of an automobile (passenger vehicle) 10 that comprises a front windshield 20 having a glass protective PSA sheet 1 applied by the glass protective PSA sheet application method of this embodiment. Fig. 2 and Fig. 3 show drawings illustrating the process of applying the glass protective PSA sheet 1 in the glass protective PSA sheet application method.

Front windshield 20 is installed, via a window molding 12 attached to its perimeter, in an opening in the body of automobile 10. Glass protective PSA sheet 1 can be applied before attaching window molding 12 to front windshield 20, after attaching window molding 12 to front windshield 20 but before installing front windshield 20 in automobile 10, or after installing front windshield 20 in automobile 10. For example, from the standpoint of the ease of its positioning relative to edges 26 of front windshield 20 and the ease of application, in a preferable embodiment, after front windshield 20 is equipped with window molding 12, glass protective PSA sheet 1 is applied before installing the front windshield 20 in automobile 10.

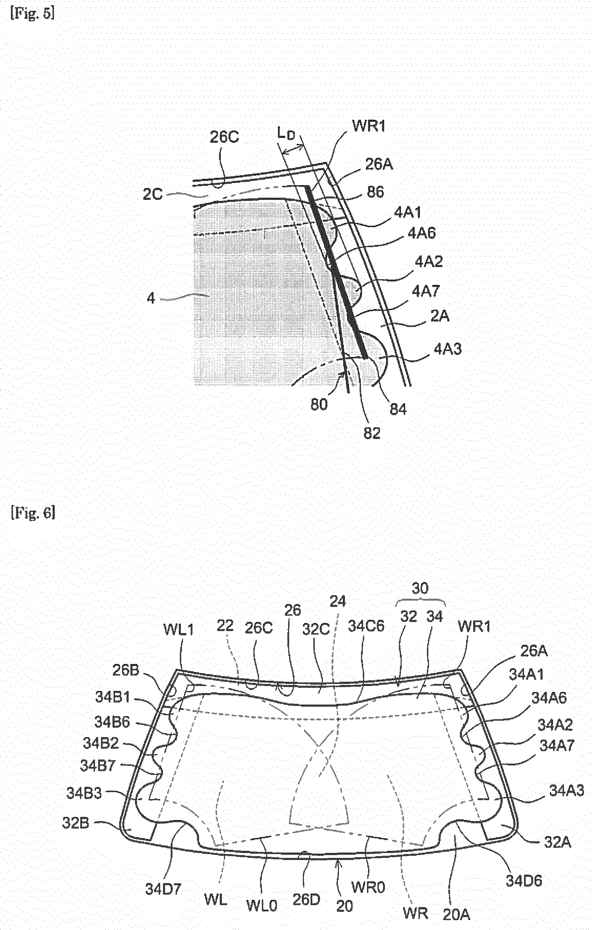

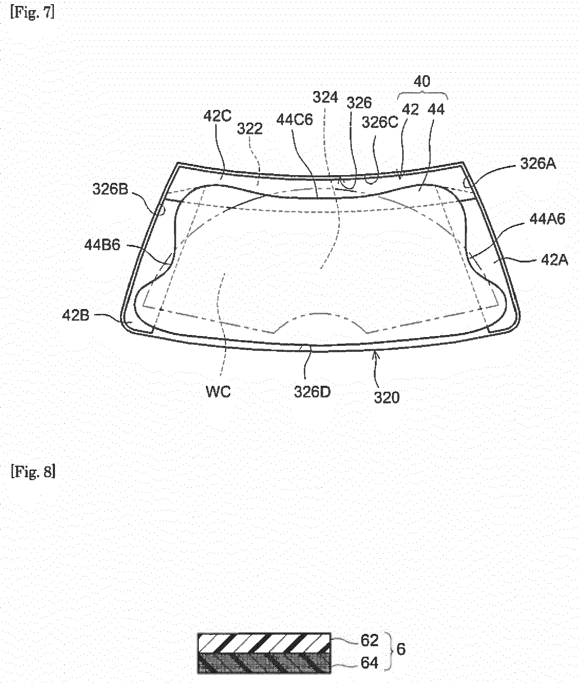

For the convenience of description, Figs. 2 and 3 show only the area inside the edges 26. Similarly, Figs. 6 and 7 illustrating the second and third embodiments described later show only the areas inside the edges 26 and 326 in glass windows 20 and 320.

Glass protective PSA sheet 1 comprises an edge piece 2 applied to a periphery 22 of front windshield 20 and a center piece 4 applied over the edge piece 2 to cover a central area 24 in front windshield 20. Edge piece 2 is formed of three PSA sheet pieces. In other words, it is formed of a right edge piece 2A applied to the periphery 22 along the right side 26A of edges 26 of front windshield 20, a left edge piece 2B applied to the periphery 22 along the left side 26B, and an upper edge piece 2C applied to the periphery 22 along the upper side 26C. On the other hand, center piece 4 is formed of a single PSA sheet piece. The glass protective PSA sheet application method of this embodiment is practiced by obtaining and using edge pieces 2A, 2B, 2C and center piece 4 prepared in certain shapes.

In particular, as shown in Fig. 2, first, right edge piece 2A and left edge piece 2B are applied to the periphery 22 along the right side 26A and left side 26B of front windshield 20. The order of applying the right edge piece 2A and left edge piece 2B is not particularly limited, and either one can be applied first. Alternatively, the right edge piece 2A and left edge piece 2B can be applied in parallel.

Fig. 2 shows both the range of the periphery 22 and the range of the central area 24 in front windshield 20. In particular, the periphery 22 is the frame-shaped area along edges 26 of front windshield 20, having a width equivalent to 10 % of the length of whichever is shorter (herein, the length of center line L1) between the center line L1 of the width direction and the center line L2 of the height direction of front windshield 20. The central area 24 is the area inside a circle that is centered at the intersection between the center line L1 of the width direction and the center line L2 of the height direction of front windshield 20 and has a diameter equivalent to 30 % of the length of whichever is shorter between the center line L1 and the center line L2 (i.e. of the length of center line L1).

Right edge piece 2A is formed in a band having a length slightly shorter than the right side 26A of front windshield 20. The length of right edge piece 2A can be shorter, for instance, by 0.5 to 30 % (preferably 5 to 20 %) than the length of right side 26A. The right side and lower side of right edge piece 2A are shaped to generally fit the corresponding edges 26 (right side 26A, lower side 26D) of front windshield 20. The left side (inner edge) of right edge piece 2A is generally straight. The upper side of right edge piece 2A is slant in such a way that the length of right edge piece 2A decreases from its left side to its right side. In other words, in right edge piece 2A, the portion applied to the edge side of front windshield 20 has a length smaller than the length of the portion applied to the center side. The right edge piece 2A having such a shape may further facilitate proper application of right edge piece 2A. When applied to a front windshield 20 having a shape with increasing curvature toward the edges, it is particularly meaningful to form the right edge piece 2A in a shape as described above.

Right edge piece 2A has a width of preferably 300 mm or smaller, more preferably 250 mm or smaller, or yet more preferably 200 mm or smaller. Making the width of right edge piece 2A smaller may further facilitate proper application of right edge piece 2A. From the standpoint of the handling properties, the width of right edge piece 2A is preferably 50 mm or larger, more preferably 70 mm or larger, or yet more preferably 100 mm or larger. A large width of right edge piece 2A is preferable also from the standpoint of obtaining greater effect of the combined use of right edge piece 2A and center piece 4. The length to width ratio (length/width) of right edge piece 2A is not particularly limited. From the standpoint of the handling properties, the length/width ratio of right edge piece 2A can be, for instance, about 2 to 30, or usually suitably about 3 to 20.

Herein, the length of right edge piece 2A refers to the maximum length from one end to another end of the length direction. The width of right edge piece 2A refers to the width of the portion formed with generally a constant width, excluding the portions near the upper and lower sides where the width varies greatly. In the examples shown in Figs. 1 to 3, the length of right edge piece 2A on the left side (inner edge) is referred to as the length of right edge piece 2A and the width of right edge piece 2A around the central region of the length direction is referred to as the width of right edge piece 2A.

Right edge piece 2A is preferably applied so that the distances from its right side to edges 26 of front windshield 20 are 0 mm or greater, but 30 mm or less (preferably greater than 0 mm, but 20 mm or less, more preferably greater than 0 mm, but 15 mm or less). It is preferable to shape right edge piece 2A to allow such application. The distances from the lower side of right edge piece 2A to edges 26 of front windshield 20 are also preferably in the ranges given above. It is particularly preferable to prepare and apply right edge piece 2A so that the distances from the right side and lower side of right edge piece 2A to edges 26 of front windshield 20 are all in the ranges given above.

By shortening the distances from right edge piece 2A to edges 26 of front windshield 20, the exposed surface area of outer surface 20A of front windshield 20 can be reduced in this area to produce higher protective performance. For instance, it can prevent to a greater extent the damage to the exposed area between right edge piece 2A and edges 26 of front windshield 20 and the entering of rain from the right side of right edge piece 2A.

In the art disclosed herein, glass protective PSA sheet 1 is applied in separate center piece 4 and edge piece 2; and therefore, it provides better handling in comparison to a conventional glass protective PSA sheet formed entirely in a single PSA sheet piece. This may advantageously contribute to applying the respective pieces with ease and great positional precision. In particular, because right edge piece 2A used in this embodiment is formed in a band shape corresponding to one side (right side 26A herein) of edges 26 of front windshield 20, its positioning against edges 26 is easier when compared with a single-piece edge piece in an L shape corresponding to two adjacent sides (e.g. upper and right sides). Accordingly, in a practical amount of time, edge piece 2A can be applied precisely to a desirable location. The same applies to application of left edge piece 2B and upper edge piece 2C.

Left edge piece 2B may have a similar shape as right edge piece 2A other than that its left and lower sides are shaped to generally fit the left side 26B and lower side 26D of front windshield 20. Left edge piece 2B is preferably applied so that the distances from its left side (more preferably its left and lower sides) to edges 26 of front windshield 20 are in the aforementioned preferable ranges in right edge piece 2A. It is preferable to shape left edge piece 2B to allow such application. When the shape of front windshield 20 is bilaterally symmetrical, the outer shape of left edge piece 2B can be the shape of right edge piece 2A flipped over.

Subsequently, as shown in Fig. 3, upper edge piece 2C is applied to the periphery 22 along the upper side 26C of front windshield 20. The upper side of upper edge piece 2C is shaped to generally fit the upper side 26C of edges 26 of front windshield 20. Upper edge piece 2C is formed in a band shape where the upper and lower sides are approximately in parallel.

Upper edge piece 2C has a width of preferably 300 mm or smaller, more preferably 250 mm or smaller, or yet more preferably 200 mm or smaller. Making the width of upper edge piece 2C smaller may facilitate proper application of upper edge piece 2C. From the standpoint of obtaining greater effect of the combined use of upper edge piece 2C and center piece 4 as well as of the handling properties of upper edge piece 2C, the width of upper edge piece 2C is preferably 50 mm or larger, more preferably 70 mm or larger, or yet more preferably 100 mm or larger. From the standpoint of the handling properties of upper edge piece 2C, etc., the length to width ratio (length/width) of upper edge piece 2C can be, but not particularly limited to, for instance, about 3 to 30, or usually preferably about 5 to 30.

In this embodiment, the upper side of upper edge piece 2C is directly applied over its entire length to the outer surface 20A of front windshield 20. At the upper ends of right edge piece 2A and left edge piece 2B already applied to front windshield 20, the two ends of the length direction of upper edge piece 2C are applied, extending from the back faces (outer faces) of edge pieces 2A and 2B over the outer surface 20A of front windshield 20. In view of the shape (contours) of front windshield 20, the respective edge pieces 2 (edge pieces 2A, 2B and 2C) can be prepared to allow such application. In an area further on the side of upper side 26C of front windshield 20 relative to the upper ends of right and left edge pieces 2A and 2B, by directly applying upper edge piece 2C to front windshield 20, it is possible to effectively prevent the entering of rain from the upper edges of right edge piece 2A and left edge piece 2B and from the seams of edge pieces 2A, 2B and 2C. This can combine increased positional precision and increased workability brought about by dividing the edge piece 2 into multiple pieces along with assured protection of front windshield 20, all at a high level. Upper edge piece 2C is preferably applied so that the upper end of right edge piece 2A is placed, from its left side through its right side, below upper edge piece 2C; and the upper end of left edge piece 2B is placed, from its right side through its left side, below upper edge piece 2C. This can prevent the entering of rain to a greater extent.

Upper edge piece 2C is preferably applied so that the distances from its upper side to the upper side 26C of front windshield 20 are 0 mm or larger, but 30 mm or smaller (preferably larger than 0 mm, but 20 mm or smaller, more preferably larger than 0 mm, but 15 mm or smaller). It is preferable to shape upper edge piece 2C to allow such application. By shortening the distances from the outer edge of upper edge piece 2C to the upper side 26C of front windshield 20, the exposed surface area of the outer surface 20A of front windshield 20 can be reduced in this area to produce higher protective performance. It is more preferable that the distances from the right and left sides (i.e. the two ends of the length direction) of upper edge piece 2C to edges 26 (right side 26A and left side 26B) of front windshield 20 are also in the ranges given above.

It is preferable to apply right, left and upper edge pieces 2A, 2B and 2C forming the edge piece 2 in such a way that the distances from the edge piece 2 to the edges 26 of the front windshield are 0 mm or greater, but 30 mm or less (preferably greater than 0 mm, but 20 mm or less, more preferably greater than 0 mm, but 15 mm or less). It is preferable to fabricate edge pieces 2A, 2B and 2C to allow such application. By shortening the distances from the outer edges of edge piece 2 to edges 26 of front windshield 20, the exposed surface area of the outer surface 20A of front windshield 20 can be reduced in this area to produce higher protective performance.

Edge pieces 2A, 2B and 2C are preferably applied so that the distances from the inner edges of the respective pieces to edges 26 of front windshield 20 are 50 mm to 300 mm (more preferably 70 mm to 250 mm, yet more preferably 100 mm to 200 mm). This can bring about protection of the periphery 22 of front windshield 20 and ease of applying edge pieces 2A, 2B and 2C as well as center piece 4, in a well-balanced manner. Such application is preferable also from the standpoint that edge pieces 2A, 2B and 2C are unlikely to hinder the visibility.

Subsequently, as shown in Fig. 1, center piece 4 is applied over edge piece 2 to cover a region comprising the central area 24 of front windshield 20. For this, center piece 4 is applied so that its outer margins overlap inner margins of edge piece 2. In other words, in the overlapping areas, the outer margins of center piece 4 are applied to the back faces of the inner margins of edge piece 2. It is preferable to fabricate and apply center piece 4 so that the overlapping areas between center piece 4 and edge piece 2 are formed continuously from right edge piece 2A via upper edge piece 2C to left edge piece 2B. This allows effective prevention of the entering of rain from the seams of edge piece 2 and center piece 4. Accordingly, increased workability brought about by dividing glass protective PSA sheet 1 into multiple pieces can be combined at a high level with protective performance assured on front windshield 20.

Applying the outer margins of center piece 4 over the inner margins of edge piece 2 may facilitate proper application of center piece 4. This is described with reference to Fig. 4. Fig. 4 schematically illustrates, in a cross-sectional view, the main part of the cross section at line IV-IV in Fig. 1. In general, the outer surface 20A of front windshield 20 is a convex surface. In view of this, by applying the outer margins of center piece 4 over the back faces of edge pieces 2A and 2B applied to the periphery 22 along the right side 26A and left side 26B, respectively, of the edges 26; center piece 4 can be made less curved with the added thickness of edge pieces 2A and 2B when compared with a case where the outer margins of center piece 4 are directly applied to the outer surface 20A of front windshield 20. In other words, it is possible to reduce the extent of deformation of center piece 4 from its flat shape. This may facilitate proper application of center piece 4 (e.g. by reducing the number and extent of wrinkles).

As shown in Fig. 1, in center piece 4, the area applied over right edge piece 2A comprises projections where the outline of center piece 4 partially projects (curves) outwards to the right side 26A of front windshield 20. In particular, in the order from the roof side of automobile 10, the first projection 4A1, second projection 4A2 and third projection 4A3 are provided, spaced at intervals. There are formed a first indentation 4A6 between the first and second projections 4A1 and 4A2 and a second indentation 4A7 between the second and third projections 4A2 and 4A3. These indentations 4A6 and 4A7 are segments where the outline of center piece 4 partially recesses (curves) inwards away from the right side 26A. Including such indentations 4A6 and 4A7 is effective in facilitating to release distortion possibly arising when center piece 4 is deformed from its flat shape and to properly apply center piece 4.

In center piece 4, the area applied over left edge piece 2B and the area applied over upper edge piece 2C also comprise indentations 4B6 and 4C6 in the central regions of their length directions. On the respective sides of indentations 4B6 and 4C6, there are formed projections where the outline of center piece 4 curves outwards to edges 26 of front windshield 20. In addition, in center piece 4, an indentation 4D6 is formed near the right end of the area applied along the lower side 26D of front windshield 20. These indentations 4B6, 4C6 and 4D6 also serve to release the distortion in center piece 4.

Automobile 10 comprises two wipers 80 and 90 capable of wiping the surface of front windshield 20. Similarly to a known general automobile wiper, wiper (right wiper) 80 to wipe an area on the right side when looked at from the outer surface side of front windshield 20 comprises a wiper arm 82, a blade-supporting member 84 attached to one end thereof, and a blade 86 supported with blade-supporting member 84. Likewise, wiper (left wiper) 90 to wipe an area on the left side when looked at from the outer surface side of front windshield 20 comprises a wiper arm 92, a blade-supporting member 94 attached to one end thereof, and a blade 96 supported with blade-supporting member 94. Wipers 80 and 90 are constructed to be driven by a wiper motor not shown in the drawing to put the blades 86 and 96 in back and forth motion in the right wiping area WR and left wiping area WL, respectively. Wipers 80 and 90 are constructed in such a way that in the state where glass protective PSA sheet 1 is applied to front windshield 20 as shown in Fig. 1, blades 86 and 96 are allowed to move on the outer surface of PSA sheet 1 to wipe off deposits (water, dirt, etc.) from the outer surface of PSA sheet 1; and after PSA sheet 1 is removed, blades 86 and 96 are allowed to move on the outer surface 20A of front windshield 20 to wipe off deposits from the outer surface 20A of front windshield 20.

As well illustrated in Fig. 5, center piece 4 is applied in such a manner that blade 86 is placed over the first projection 4A1 and the second projection 4A2 at the position (closest-to-lateral-side position) WR1 where blade 86 of right wiper 80 comes closest to the right side 26A of front windshield 20. Thus, blade 86 at the closest-to-lateral-side position WR1 comes to cross over the first indentation 4A6 and be supported on projections 4A1 and 4A2. Like this, by supporting blade 86 on projections 4A1 and 4A2 at the closest-to-lateral-side position WR1, the load that blade 86 applies on right edge piece 2A can be reduced. By supporting blade 86 with two projections 4A1 and 4A2, the blade 86 can be supported more stably when compared with a case where it is supported with a single projection (e.g. projection 4A2). It is also preferable in view that the force of blade 86 pushing against front windshield 20 is diffused over projections 4A1 and 4A2.

To facilitate applying center piece 4 in the relative position described above, the distance (i.e. the depth of indentation 4A6) $L_D$ from the line connecting the top points of the first projection 4A1 and second projection 4A2 to the line running in parallel to the first line through the bottom point of the indentation 4A6 is suitably 20 mm or greater, preferably 50 mm or greater, or yet more preferably 70 mm or greater. Making the depth $L_D$ of indentation 4A6 greater facilitates the positioning of center piece 4 to bring about such a state where the blade 86 is supported on projections 4A1 and 4A2 at the closest-to-lateral-side position WR1. This can further reduce the labor time needed to apply center piece 4. Making the depth $L_D$ of indentation 4A6 greater is advantageous also from the standpoint of reducing the wrinkling of center piece 4.

On the other hand, when the depth $L_D$ of indentation 4A6 is excessively large, a larger width of right edge piece 2A may be needed for the entire projections 4A1 and 4A2 to be applied onto right edge piece 2A, likely leading to a tendency to lower the ease of applying edge piece 2A. From such a standpoint, the depth $L_D$ of indentation 4A6 is suitably 200 mm or less, or preferably 150 mm or less.

From the standpoint of facilitating the positioning of center piece 4 to allow the entire projections 4A1 and 4A2 to be applied onto right edge piece 2A, the depth $L_D$ of indentation 4A6 is suitably 10 % to 90 % of the width of right edge piece 2A to which projections 4A1 and 4A2 are applied, or preferably 20 % to 80 % thereof, or yet more preferably 30 % to 70 % thereof.

As shown in Fig. 1, center piece 4 is applied so that while blades 86 and 96 move back and forth in the wiping areas WR and WL, blades 86 and 96 are always at least partially placed on center piece 4. This can prevent such an event that blades 86 and 96 moved to a position off the center piece 4 get caught on the edges of center piece 4 when they return onto (land over) center piece 4 again. This can increase the durability (an ability to maintain good adhesion) of glass protective PSA sheet 1 against the operation of wipers 80 and 90. It is more preferable that at least 50 % or more of the lengths of blades 86 and 96 are always positioned on center piece 4.

To increase the durability of glass protective PSA sheet 1 against the operation of wipers 80 and 90, it is also advantageous that the outer margins of center piece 4 are applied over the inner margins of edge piece 2. This can prevent blades 86 and 96 from getting caught on the inner edges of edge piece 2 when wipers 80 and 90 are operated.

The indentation 4D6 is formed off the range of wiping area WR. This can increase the ease of applying center piece 4 while preventing blade 86 from making direct contact with the outer surface 20A of front windshield 20.

The glass protective PSA sheet 1 of this embodiment is applied to cover the entire ranges of wiping areas WR and WL. In other words, the outer surface 20A of front windshield 20 is not exposed anywhere in the wiping area WR or WL. This can surely prevent blade 86 from making direct contact with the outer surface 20A of front windshield 20, producing high protective performance.

In an upper left area of center piece 4, there is formed a large projection (sticking-out area) 4E that sticks out beyond the range of wiping area WL of blade 96. By making such a projection 4E, if a wrinkle is about to be formed due to unskillfulness or poor performance of a worker during application of center piece 4, while its extent is small, the wrinkle can be pushed towards projection 4E and formed therein so as to avoid wrinkle formation in other places. Since projection 4E is off the wiping areas WR and WL, even if it includes a wrinkle, blade 86 or 96 will not get caught. Thus, if a wrinkle is about to be formed, by forming the wrinkle not in the wiping area WR or WL, but in the projection 4E, redoing the application of center piece 4 can be avoided to reduce the labor time and also the influence on the durability of glass protective PSA sheet 1 against the operation of wipers 80 and 90 can be reduced.

In a modification example of the present embodiment, upper edge piece 2C may be first applied, and right edge piece 2A and left edge piece 2B may be subsequently applied. For this, the upper ends of right edge piece 2A and left edge piece 2B can be applied over the back faces of the two ends of upper edge piece 2C. The application can be carried out also in the order of right edge piece 2A, upper edge piece 2C and left edge piece 2B or in the order of left edge piece 2B, upper edge piece 2C and right edge piece 2A.

(Second Embodiment)

Fig. 6 shows a plan view of a front windshield 20 having a glass protective PSA sheet 30 applied by the glass protective PSA sheet application method of this embodiment. This particular front windshield 20 is an automobile front windshield having wipers that operate in a different mode from the first embodiment. In particular, in wipers 80 and 90 in the first embodiment shown in Fig. 1, blades 86 and 96 move in the same direction (toward the right herein) from the lower ends WR0 and WL0 of wiping areas WR and WL. In the wipers applied to front windshield 20 in the second embodiment shown in Fig. 6, two blades move from the lower ends WR0 and WR0 of wiping areas WR and WL toward the right side 26A and left side 26B, respectively, of front windshield 20. That is, they operate so as to open up the two blades, right and left.

Glass protective PSA sheet 30 applied to front windshield 20 to which such wipers are applied is constructed with an edge piece 32 applied to the periphery 22 of front windshield 20, a single center piece 34 applied over edge piece 32 to cover the central area 24 of front windshield 20. Similarly to the edge piece 2 in the first embodiment, edge piece 32 is formed of three PSA sheet pieces, namely, a right edge piece 32A, a left edge piece 32B and an upper edge piece 32C. The shapes of the respective edge pieces 32A, 32B and 32C and the locations where they are applied are the same as the edge pieces 2A, 2B and 2C in the first embodiment.

Similarly to the corresponding area in center piece 4 of the first embodiment, in center piece 34, the area applied over right edge piece 32A are provided with first, second and third projections 34A1, 34A2 and 34A3 spaced at intervals. There are formed a first indentation 34A6 between the first and second projections 34A1 and 34A2 and a second indentation 34A7 between the second and third projections 34A2 and 34A3. The relationship of the projections 34A1 and 34A2 with the right wiper's blade at the position (closest-to-lateral-side position) WR1 where it comes closest to the right side 26A of front windshield 20 is the same as in the first embodiment.

Center piece 34 in this embodiment is shaped so that the area applied over left edge piece 32B is symmetrical to the area applied over right edge piece 32A. In other words, in center piece 34, in the area applied over left edge piece 32B, there are formed first, second and third projections 34B1, 34B2 and 34B3 spaced at intervals in the order from the automobile roof side. There are formed a first indentation 34B6 between the first and second projections 34B1 and 34B2 and a second indentation 34B7 between the second and third projections 34B2 and 34B3. Center piece 34 is applied so that at the position (closest- to-lateral-side position) WL1 where the left wiper's blade comes closest to the left side 26B of front windshield 20, the blade crosses over the first indentation 34B6, supported on projections 34B1 and 34B2. Center piece 34 is formed in a shape by which the blade's closest-to-lateral-side position WR1 satisfies the aforementioned positional relationship with projections 34A1 and 34A2 while the blade's closest-to-lateral-side position WL1 satisfies the aforementioned positional relationship with projections 34B1 and 34B2.

By applying glass protective PSA sheet 30 so shaped to satisfy the positional relationships described above, the right wiper's blade can be supported stably on projections 34A1 and 34A2 at its closest-to-lateral-side position WR1 and the left wiper's blade can be supported stably on projections 34B1 and 34B2 at its closest-to-lateral-side position. This can reduce the load applied by the two blades on the glass protective PSA sheet 30.

Similarly to center piece 4 of the first embodiment, center piece 34 is applied so that in wiping areas WR and WL, the respective blades are always at least partially placed on center piece 34. This can increase the durability of glass protective PSA sheet 30 against the operation of wipers.

Similarly to center piece 4 of the first embodiment, in center piece 34, the area applied over left edge piece 32C is provided with an indentation 34C6 in the central region of its length direction. In center piece 34, the area applied along the lower side 26D of front windshield 20 is provided, near its right end, with an indentation 34D6 similar to the one in center piece 4 of the first embodiment; and, near its left end, with an indentation 34D7 as well in the position and shape symmetrical to those of indentation 34D6. These indentations 34C6, 34D6 and 34D7 also serve to release the distortion in center piece 34 and reduce wrinkle formation.

(Third Embodiment)

Fig. 7 shows a plan view of a rear windshield 320 having a glass protective PSA sheet pieces 40 applied by the glass protective PSA sheet application method of this embodiment. This rear windshield 320 is an automobile rear windshield to which a single wiper (rear wiper) is applied. This wiper is constructed to allow a blade to move back and forth in a semicircular wiping area WC.

Glass protective PSA sheet 40 is formed with an edge piece 42 applied to a periphery 322 of rear windshield 320 and a single center piece 44 applied over edge piece 42 to cover a central area 324 of rear windshield 320. Similarly to edge piece 2 of the first embodiment, edge piece 42 is formed of three PSA sheet pieces, namely, a right edge piece 42A, a left edge piece 42B and an upper edge piece 42C. Other than being applied to the rear windshield, the shapes of the respective edge pieces 42A, 42B and 42C and the locations where they are applied can be the same as the edge pieces 2A, 2B and 2C in the first embodiment.

In center piece 44, the area applied over left edge piece 42B and the area applied over upper edge piece 42C are provided, in the central regions of their length directions, with indentations 44B6 and 44C6, similarly to the corresponding areas in center piece 4 of the first embodiment. On the respective sides of indentations 44B6 and 44C6, there are formed projections where the outline of center piece 44 curves outwards to the left side 326B and upper side 326C, respectively, of rear windshield 320.

In this embodiment, in center piece 44, the area applied over right edge piece 42A is shaped symmetrically to the area applied over left edge piece 42B. In other words, in center piece 44, the area applied over right edge piece 42A is provided with an indentation 44A6 in the central region of its length direction. On both sides of indentation 44A6, there is formed a projection where the outline of center piece 44 curves outwards to the right side 326A of rear windshield 320. Including these indentations 44A6, 44B6 and 44C6 is effective in facilitating to release distortion possibly arising when center piece 44 is deformed from its flat shape and to properly apply center piece 44. It is noted that in this embodiment, in center piece 44, while the area applied along the lower side 326C of rear windshield 320 is not provided with an indentation, an indentation can be provided, for instance, to the central region of the length direction at lower side 326D.

Similarly to center piece 4 of the first embodiment, center piece 44 is applied so that the blade is always at least partially placed on center piece 44 in wiping area WC. This can increase the durability of glass protective PSA sheet 40 against the operation of the wiper.

The glass protective PSA sheet 40 of this embodiment can be preferably applied also to a rear windshield of an automobile free of a wiper (rear wiper).

In each of the first to third embodiments described above, while edge pieces are applied to the periphery along the right, left and upper sides of the glass window, no edge piece is applied to the periphery along the lower side; and the periphery on the lower side is protected with a center piece applied thereto. However, the glass protective PSA sheet application method disclosed herein is not limited to such an embodiment where the edge piece is applied along the right, left and upper sides of the glass window. For instance, from the standpoint of placing greater importance on the protective performance, in addition to applying edge pieces to the periphery along the right, left and upper sides of the glass window, an edge piece may be applied to the periphery along the lower side as well. From the standpoint of placing greater importance on the saving of labor time, it may be constructed to provide protection by applying an edge piece to the periphery just along the right and left sides of the glass window and a center piece to the periphery along the upper and lower sides.

In a preferable embodiment, similarly to the first to third embodiments, edge pieces are applied to the periphery along the right, left and upper sides of a glass window while an edge piece applied to the periphery along the lower side is omitted. Among the edges of the center piece, the side facing the lower side of the glass window is less susceptible to entering of rain when compared with the other sides (right, left and upper sides). Thus, by omitting the edge piece applied to the periphery along the lower side of the glass window, while inhibiting the lowering of protective performance, the labor time for applying the glass protective PSA sheet can be effectively reduced. This can bring about good protective performance and reduced labor time at a high level in a well-balanced manner.

While the first to third embodiments use glass protective PSA sheets having indentations in the center pieces are used, a glass protective PSA sheet having an indentation in an edge piece can be used as well. Including an indentation in an edge piece may facilitate to release distortion possibly arising when the edge piece is made to conform to the outer surface contours of the glass window and to properly apply the edge piece. The location of the indentation in the edge piece is not particularly limited. For instance, an indentation can be provided to the inner margin of the edge piece. In this case, it is preferable to apply the edge piece and center piece so that the bottom of the indentation in the edge piece is covered with the center piece (i.e. so that the outer surface of the glass window is not exposed).

The PSA sheet (one or each of the edge piece and center piece) used in the glass protective PSA sheet application method disclosed herein may be provided with a slit from an edge towards the inside of the PSA sheet. Such a slit may serve to release distortion possibly arising when the PSA sheet (particularly the center piece) is made to conform to the outer surface contours of the glass window. From the standpoint of the ease of manufacturing (ease of die-cutting, etc.) of the PSA sheet, it is advantageous to not include an excessively large number of slits. From such a standpoint, in addition to forming indentations as described above, it is preferable to make supplemental slits as necessary. The glass protective PSA sheet application method disclosed herein can be preferably practiced using a PSA sheet free of the slit; and it allows proper and efficient application of the PSA sheet to an outer surface of an automobile glass window.

In the center piece used in the glass protective PSA sheet application method disclosed herein, its outline (perimeter) is preferably free of a segment turning (bending) at an angle of 90° or less.

According to a center piece whose outline is free of a segment (an inward corner) turning from the inward to the outward at an angle of 90° or less, it may be possible to prevent damage such as local stretching, etc., caused by concentration of load at the inward corner during handing of the center piece. From such a standpoint, in a preferable center piece, the indentation is formed of a curve.

According to a center piece of which the outline is free of a segment (outward corner) turning (bending) from the outward to the inward at an angle of 90° or less, it may be possible to prevent the peeling caused by concentrated external force (wiper blade dragging, wind pressure, etc.) applied to the outward corner. From such a standpoint, in a preferable center piece, the projections are formed of curves.

The glass protective PSA sheet application method disclosed herein can be preferably practiced in, but not limited to, an embodiment where the proportion of the outer surface of the glass window covered with the edge piece is greater than 10 %. In other words, the glass window coverage $R_E$ by edge piece is preferably greater than 10 %. With a high coverage $R_E$, even when the coverage $R_C$ by center piece is made lower, the glass window coverage $R_T$ by the entire glass protective PSA sheet can be high and sufficient protective performance can be produced. A low coverage $R_C$ by center piece may facilitate proper application of the center piece. From such a standpoint, the glass window coverage $R_E$ by edge piece is preferably 15 % or higher, more preferably 20 % or higher, or yet more preferably 25 % or higher. On the other hand, from the standpoint of facilitating proper application of the edge piece, it is advantageous that the coverage $R_E$ is not excessively high. For instance, the coverage $R_E$ is suitably 60 % or lower, preferably 50 % or lower, or more preferably 45 % or lower.

Herein, when the edge piece is formed of multiple PSA sheet pieces, the glass window coverage $R_E$ by edge piece refers to the proportion of the surface area covered by the entirety of these edge pieces in the surface area of the glass window. In the first to third embodiments, since the two ends of the upper edge piece are applied over the right and left edge pieces, the surface area of the glass window covered by these edge pieces is smaller than the value of the total surface area of the individual right, left and upper edge pieces. In the glass protective PSA sheet application method disclosed herein, since the outer margins of the center piece are applied to the inner margins of the edge piece, the glass window coverage $R_T$ by the entirety of the glass protective PSA sheet is smaller than the combined value of the coverage $R_E$ by edge piece and coverage $R_C$ by center piece.

The glass window coverage $R_C$ by center piece is not particularly limited as far as it is below 100 %. For instance, the coverage $R_C$ can be 95 % or lower (typically below 95 %), or preferably 90 % or lower. A lower coverage $R_C$ tends to facilitate proper application of the center piece. From such a standpoint, the coverage $R_C$ is more preferably 85 % or lower. The lower limit of coverage $R_C$ is not particularly limited as far as its value yields a surface area by which the center piece can cover the entire central area of the glass window. With a high coverage $R_C$, even when the coverage $R_E$ by edge piece is made lower, the glass window coverage $R_T$ by the entirety of the glass protective PSA sheet can be high, and sufficient protective performance can be produced. From such a standpoint, the coverage $R_C$ is preferably 50 % or higher, more preferably 60 % or higher, or yet more preferably 70 % or higher.

The glass window coverage $R_T$ by the entirety of the glass protective PSA sheet is not particularly limited as far as it is 100 % or lower. From the standpoint of bringing about protective performance and ease of application in a well-balanced manner, in usual, the coverage $R_T$ is preferably 95 % or higher (typically above 95 %), or more preferably 97 % or higher. According to the art disclosed herein, the combined use of the edge piece and center piece allows applying the glass protective PSA sheet properly and efficiently to an automobile glass window while yielding such a high coverage $R_T$. From the standpoint of preventing wind-caused peeling and entering of rain, the glass protective PSA sheet is preferably applied not to extend off the edges of the glass window. In other words, it is preferably applied inside the edges of the glass window.

The glass protective PSA sheet application method disclosed herein is characterized by using an edge piece and a center piece in combination as the glass protective PSA sheet and applying outer margins of the center piece over inner margins of the edge piece. The construction or materials of the respective pieces is not particularly limited. Usually, as shown in Fig. 8, a PSA sheet 6 comprising a substrate sheet 62 and a PSA layer 64 formed on one face thereof can be used for the edge piece and center piece of the glass protective PSA sheet in the art disclosed herein.

As the substrate (support substrate) to support the PSA layer, a plastic film can be preferably used. The concept of plastic film herein typically refers to a thin, non-porous plastic layer and is distinct from the woven fabric and non-woven fabric. The plastic film may have a single-layer structure or a multi-layer structure including two, three or more layers. From the standpoint of the transparency, a plastic film having a single-layer structure can be preferably used.

In the glass protective PSA sheet application method disclosed herein, as described above, the outer margins of the center piece are applied over the back face of the edge piece. In such an application method, the use of plastic film as the substrate can effectively prevent the entering of rain from the edges of the center piece. This is because when a plastic film is used as the substrate of the edge piece, the space between the plastic film and the PSA of the center piece is between the two resins. In general, a space between two resins is less susceptible to entering of water in comparison with a space between glass and resin. Thus, by applying the outer margins of the center piece to the plastic film (substrate of the edge piece), it is possible to better prevent the entering of rain from the edges of the center piece in comparison with a case where the outer margins are directly applied to the glass window.

Examples of the resin material constituting the plastic film as the substrate (or the plastic film substrate, hereinafter) include polyolefin resins; polyester resins such as polyethylene terephthalate (PET), etc.; polyamide resins; polycarbonate resins; polyurethane resins; acrylic resins; and the like. These can be used singly as one species or in a combination of two or more species. When two or more species of resins are used in combination, these resins may be blended for the use or used separately (e.g. as the materials constituting different layers in a plastic film having a multi-layer structure).

From the standpoint of the weatherability and transparency of the glass protective PSA sheet, as the substrate, a plastic film substrate in which the primary component of the resin material is a polyolefin resin can be preferably used. Herein, the primary component of the resin material being a polyolefin resin means that the polyolefin resin accounts for more than 50 % by mass of the resin material. The polyolefin resin content in the resin material is preferably 70 % by mass or greater, more preferably 90 % by mass or greater, or yet more preferably 95 % by mass or greater. In a preferable embodiment, the resin material essentially consists of a polyolefin resin.

Preferable examples of the polyolefin resin include a polyethylene resin (PE) and a polypropylene resin (PP). A preferable plastic film substrate comprises one or both of PE and PP as the resin material. In a preferable embodiment, 75 % by mass or more of the resin material in the plastic film substrate is PP. Essentially 100 % by mass of the resin material in the plastic film substrate may be PP. When the resin material comprises another resin in addition to PP, the other resin may be a polyolefin other than PP, for instance, PE.

The PP may be various types of polymer formed from propylene (propylene-based polymer). The concept of propylene-based polymer includes the following examples.

Propylene homopolymers (homo-polypropylenes). For example, isotactic polypropylene, syndiotactic polypropylene and atactic polypropylene.

Random copolymers (random polypropylenes) of propylene with other α-olefins. Typically, a random copolymer of propylene with one, two or more species selected among ethylene and α-olefins with 4 to 10 carbons. Preferably, a random copolymer formed from propylene being the primary monomer (i.e. a component accounting for 50 % by mass or more of all monomers combined; the same applies hereinafter). For example, a random copolymer of 96 to 99.9 % (by mole) propylene and 0.1 to 4 % (by mole) other α-olefin(s) (preferably ethylene and/or butane).

Copolymers (block polypropylenes) of propylene block-copolymerized with other α-olefin(s). Typically, a copolymer of propylene block-copolymerized with one, two or more species selected from ethylene and α-olefins with 4 to 10 carbons. A block polypropylene formed from propylene being the primary monomer is preferable. Typically, as a side product, a rubber component formed from propylene and at least one species among the other α-olefins is further included. For instance, a block polypropylene comprising a polymer formed by block copolymerization of 90 to 99.9 % (by mole) propylene and 0.1 to 10 % (by mole) other α-olefin(s) (preferably ethylene and/or butane) and further comprising, as a side product, a rubber component formed from propylene and at least one species among the other α-olefins.

A thermoplastic olefin resin (TPO) or thermoplastic elastomer (TPE) of a reactor blend type obtainable by copolymerizing a large amount of a rubber component with a propylene-based polymer as described above. Alternatively, a TPO or TPE of a dry blend type obtainable by mechanically dispersing the rubber component.

A copolymer of propylene with a monomer (a functional group-containing monomer) having another functional group in addition to the polymerizable functional group and a copolymer of a propylene-based polymer with such a functional group-containing monomer.

The resin material constituting the plastic film substrate may comprise one, two or more species of such PP. When two or more species of PP are included, these PP may be blended for the use or used separately. The usage ratio (blend ratio) of these PP is not particularly limited.

The PE may be various types of polymer formed from ethylene (ethylene-based polymer). The ethylene-based polymer may be an ethylene homopolymer or a copolymer of ethylene as the primary monomer and other α-olefin(s). Preferable examples of the other α-olefin include α-olefins with 3 to 10 carbons such as propylene, 1-butene (possibly a branched 1-butene), 1-hexene, 4-methyl-1-pentene, 1-octene, etc. It can also be a copolymer of ethylene and a monomer (functional group-containing monomer) having another functional group in addition to the polymerizable functional group, a copolymer of such a functional group-containing monomer and an ethylene-based polymer, etc. Examples of the copolymer of ethylene and a functional group-containing monomer include an ethylene-vinyl acetate copolymer (EVA), ethylene-acrylic acid copolymer (EAA), ethylene-methacrylic acid copolymer (EMAA), ethylene-methyl acrylate copolymer (EMA), ethylene-ethyl acrylate copolymer (EEA), ethylene-methyl methacrylate copolymer (EMMA), copolymer of ethylene and (meth)acrylic acid (i.e. acrylic acid and/or methacrylic acid) crosslinked with metal ions, and so on. Examples of the PE also include high density polyethylene (HDPE), medium density polyethylene (MDPE), low density polyethylene (LDPE) and linear low density polyethylene (LLDPE).

The resin material constituting the plastic film substrate may comprise one, two or more species among these PE. When two or more species of PE are included, these PE may be blended for the use or used separately. The usage ratio (blend ratio) of these PE is not particularly limited.

To the plastic film substrate, known additives usable in a plastic film used as a substrate in a general PSA sheet (typically a plastic film substrate in a protective sheet) can be suitably added, such as a light stabilizer including radical scavenger and UV absorber, antioxidant, antistatic agent, colorant (dye, pigment, etc.), filler, slip agent and anti-blocking agent, etc. Examples of light stabilizer include a species comprising as active ingredient(s) a benzotriazole, a hindered amine, a benzoate, etc. Examples of antioxidant include a species comprising as active ingredient(s) an alkylphenol, an alkylene bisphenol, a thiopropylene acid ester, an organic phosphate, an amine, a hydroquinone, a hydroxylamine, etc. These additives can be used singly as one species or in a combination of two or more species. The amounts of additives may be approximately the same as usual amounts added to a plastic film used as a substrate in a general PSA sheet.

The thickness of the substrate (e.g. a plastic film substrate) is not particularly limited. For instance, it can be

about 20 μm to 200 μm. Usually, from the standpoint of the deformable nature to conform to surface contours of adherend, the substrate's thickness is suitably 150 μm or smaller, preferably smaller than 100 μm, more preferably smaller than 80 μm, or yet more preferably smaller than 70 μm. A small thickness of the substrate is advantageous also from the standpoint that it makes it less likely for a wiper blade to get caught on the PSA sheet. On the other hand, from the standpoint of the ability to prevent the damage to glass windows caused by physical impact of a flying pebble and the like or of the handling properties of the PSA sheet, etc., the thickness of the substrate is suitably 25 μm or larger, preferably 30 μm or larger, or more preferably 40 μm or larger.

Such a plastic film substrate can be produced by suitably employing a heretofore known general film molding method (extrusion, inflation, etc.). The surface (the PSA layer-side surface) of the plastic film substrate on the side to which the PSA layer is provided may be subjected to a treatment to increase the adhesion to the PSA layer, for example, a surface treatment such as corona discharge treatment, acid treatment, UV irradiation treatment, plasma treatment, primer coating, etc. The surface (back face) of the plastic film substrate on the opposite side from the surface to which the PSA layer is provided may be subjected as necessary to a surface treatment such as antistatic treatment, release treatment, water repellency treatment, etc.

On the plastic film substrate, there can be shown some information about the purpose (vehicle type, type of glass window, etc.) of a glass protective PSA sheet using the plastic film substrate as well as marks for positioning the glass protective PSA sheet, etc. The marks may be useful in suitably positioning the edge piece and center piece, positioning edge pieces in suitable relative locations when using multiple edge pieces, positioning of the edge piece or center piece against the glass window, and so on. These information and marks may be provided by a known means such as printing, etc.

The type of PSA constituting the PSA layer is not particularly limited. For instance, the PSA layer may be constituted, comprising one, two or more species of PSA selected from various known types of PSA including an acrylic PSA, rubber-based PSA (natural rubber-based, synthetic rubber-based, a mixture of these, etc.), silicone-based PSA, polyester-based PSA, urethane-based PSA, polyetherbased PSA, polyamide-based PSA, fluorine-based PSA, etc. Herein, the acrylic PSA refers to a PSA comprising an acrylic polymer as a base polymer (a primary component among polymers, i.e. a component accounting for more than 50 % by mass). The same applies to the rubber based and other PSA. In a PSA layer preferable from the standpoint of the weatherability, transparency, etc., the acrylic PSA content is 50 % by mass or greater, more preferably 70 % by mass or greater, or yet more preferably 90 % by mass or greater. The acrylic PSA content can be greater than 98 % by mass. The PSA layer may essentially consist of an acrylic PSA.

Such an acrylic PSA (PSA layer) can be formed with a PSA composition comprising an acrylic polymer as the base polymer. The acrylic polymer is typically a copolymer of a monomer mixture comprising an alkyl (meth)acrylate as the primary monomer (a component accounting for 50 % by mass or more of all monomers) and further comprising a secondary monomer copolymerizable with the primary monomer. The monomer mixture may optionally comprise other copolymerizable component(s) in addition to these primary and secondary monomers.

In this description, the term "(meth)acrylate" refers collectively to acrylate and methacrylate. Likewise, the term "(meth)acryloyl" refers collectively to acryloyl and methacryloyl, and the term "(meth)acryl" refers collectively to acryl and methacryl.

As the alkyl (meth)acrylate, for instance, a compound represented by the following formula (1) can be used:

$$CH_2=C(R^1)COOR^2 \qquad (1)$$

Herein, $R^1$ in the formula (1) is a hydrogen atom or a methyl group. $R^2$ is a chain alkyl group having 1 to 20 carbon atoms (hereinafter, such a range of the number of carbon atoms may be indicated as "$C_{1-20}$"). From the standpoint of the storage elastic modulus of PSA, an alkyl (meth)acrylate with $R_2$ being a $C_{1-11}$ chain alkyl group is preferable, an alkyl (meth)acrylate with $R_2$ being a $C_{1-10}$ chain alkyl group is more preferable, and an alkyl (meth)acrylate with $R_2$ being a butyl group or a 2-ethylhexyl group is particularly preferable.

Examples of the alkyl (meth)acrylate having a $C_{1-20}$ chain alkyl group include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, pentyl (meth)acrylate, isopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, etc. Among these alkyl (meth)acrylates, can be used one species solely or a combination of two or more species. Particularly preferable alkyl (meth)acrylates include n-butyl acrylate (BA) and 2-ethylhexyl acrylate (2EHA).

The glass protective PSA sheet in the art disclosed herein is typically used in an embodiment such that after serving to protect an automobile glass window in the course of storage, distribution and so on of the automobile, it is removed from the glass window before the automobile is provided for use to a general consumer. Thus, it is preferable that the glass protective PSA sheet exhibits good removability on automobile glass windows. The good removability can be thought as, for example, a property that hinders the leaving of residue of PSA, etc., on a glass window surface when the PSA sheet is removed from the glass window.

The secondary monomer copolymerizable with the alkyl (meth)acrylate being the primary monomer may be useful for introducing crosslinking points in the acrylic polymer or increasing the cohesive strength of the acrylic polymer. Increasing the cohesive strength of the acrylic polymer may advantageously contribute to increase the removability of the PSA. As the secondary monomer, for instance, the following functional group-containing monomers can be used singly as one species or in a combination of two or more species.*

Carboxyl group-containing monomers: for example, ethylenic unsaturated monocarboxylic acids such as acrylic acid, methacrylic acid, crotonic acid, etc.; ethylenic unsaturated dicarboxylic acids such as maleic acid, itaconic acid, citraconic acid, etc., as well as anhydrides thereof (maleic acid anhydride, itaconic acid anhydride, etc.).

Hydroxyl group-containing monomers: for example, hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, etc.; unsaturated alcohols such as vinyl alcohol, allyl alcohol, etc.

Amide group-containing monomers: for example, (meth)acrylamide, N,N-dimethyl(meth)acrylamide, N-butyl(meth)acrylamide, N-methylol(meth)acrylamide, N-methylolpropane(meth)acrylamide, N-methoxymethyl(meth)acrylamide, N-butoxymethyl(meth)acrylamide.

Amino group-containing monomers: for example, aminoethyl (meth)acrylate, N,N-dimethylaminoethyl (meth)acrylate, t-butylaminoethyl (meth)acrylate.

Epoxy group-containing monomers: for example, glycidyl (meth)acrylate, methylglycidyl (meth)acrylate, allyl glycidyl ether.

Cyano group-containing monomers: for example, acrylonitrile, methacrylonitrile

Keto group-containing monomers: for example, diacetone (meth)acrylamide, diacetone (meth)acrylate, vinyl methyl ketone, vinyl ethyl ketone, allyl acetoacetate, vinyl acetoacetate.

Monomers having nitrogen atom-containing rings: for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, N-(meth)acryloyl morpholine.

Alkoxysilyl group-containing monomers: for example, (3-(meth)acryloxypropyl)trimethoxysilane, (3-(meth)acryloxypropyl)triethoxysilane, (3-(meth)acryloxypropyl)methyldimethoxysilane, (3-(meth)acryloxypropyl)methyldiethoxysilane.

The amount of the secondary monomer should just be suitably selected so as to obtain desirable cohesive strength and is not particularly limited. Usually, from the standpoint of combining cohesive strength and adhesive strength in a well-balanced manner, the amount of the secondary monomer is, to 100 parts by mass of the alkyl (meth)acrylate, suitably 20 % by mass or less in total, preferably 15 % by mass or less, or more preferably 10 % by mass or less.

For the purpose of increasing the cohesive strength of the acrylic polymer, etc., other co-monomer(s) besides the aforementioned secondary monomers can be used. Examples of such co-monomers include vinyl ester-based monomers such as vinyl acetate, vinyl propionate, etc.; aromatic vinyl compounds such as styrene, substituted styrenes ($\alpha$-methylstyrene, etc.), vinyl toluene, etc.; non-aromatic ring-containing (meth)acrylates such as cycloalkyl (meth)acrylates (cyclohexyl (meth)acrylate, cyclopentyl di(meth)acrylate, etc.), isobornyl (meth)acrylate, etc.; aromatic ring-containing (meth)acrylates such as aryl (meth)acrylates (e.g. phenyl (meth)acrylate), aryloxyalkyl (meth)acrylates (e.g. phenoxyethyl (meth)acrylate), arylalkyl (meth)acrylates (e.g. benzyl (meth)acrylate), etc.; olefinic monomers such as ethylene, propylene, isoprene, butadiene, isobutylene, etc.; chlorine-containing monomers such as vinyl chloride, vinylidene chloride, etc.; isocyanate group-containing monomers such as 2-(meth)acryloyloxyethyl isocyanate, etc.; alkoxy group-containing monomers such as methoxyethyl (meth)acrylate, ethoxyethyl (meth)acrylate, etc.; vinyl ether-based monomers such as methyl vinyl ether, ethyl vinyl ether, etc.; and the like. The amount of such other co-monomer(s) can be suitably selected according to the purpose and intended use, and thus is not particularly limited. For instance, it is preferably about 10 % by mass or less to 100 parts by mass of the alkyl (meth)acrylate.

The method for obtaining the acrylic polymer is not particularly limited. Various polymerization methods known as synthetic means for acrylic polymers can be suitably employed to obtain the polymer, with the methods including a solution polymerization method, emulsion polymerization method, bulk polymerization method, suspension polymerization method, etc. The acrylic polymer may be a random copolymer, a block copolymer, a graft copolymer, etc. From the standpoint of the productivity, etc., a random copolymer is usually preferable.

The acrylic PSA composition can further comprise a crosslinking agent in addition to the acrylic polymer as the base polymer. The type of crosslinking agent is not particularly limited, and a suitable one can be selected and used among various crosslinking agents usually used in the PSA field in accordance with, for example, the type of crosslinking functional group of the secondary monomer, etc. Specific examples include isocyanate-based crosslinking agents, silane-based crosslinking agents, epoxy-based crosslinking agents, oxazoline-based crosslinking agents, aziridine-based crosslinking agents, metal chelate-based crosslinking agents, etc. For the likelihood of forming a PSA layer well-balanced between adhesion and cohesion, an isocyanate-based crosslinking agent can be preferably used. The amount of crosslinking agent in the PSA composition is not particularly limited and can be selected so as to obtain desirable cohesion. It is usually suitably 1 to 10 parts by mass (preferably 1.5 to 6 parts by mass, more preferably 2 to 5 parts by mass) relative to 100 parts by mass of the acrylic polymer.

The PSA composition can comprise, as optional components, various additives generally used in the PSA field, such as antistatic agent, slip agent, anti-blocking agent, leveling agent, plasticizer, filler, colorant (pigment, dye, etc.), dispersant, stabilizing agent, preservative, anti-aging agent, crosslinking accelerator, pH-adjusting agent (typically an acid or base), etc. The amounts of such additives used can be generally about the same levels as the amounts used in general PSA sheets.

It is preferable to not add a tackifier to the PSA composition in view of the transparency and weatherability of the glass protective PSA sheet, non-contaminating nature (removability) on glass surfaces, and so on.

As the method for providing the PSA layer to the substrate, it is possible to employ, for instance, a method (direct method) where the PSA composition is directly provided (typically applied) to the substrate and subjected to a curing treatment; a method (transfer method) where the PSA composition is provided to a releasable surface (release face) and subjected to a curing treatment to form a PSA layer on the surface followed by adhering the PSA layer to the substrate to transfer the PSA layer to the substrate; and the like. The curing treatment may comprise one, two or more processes selected from drying (heating), cooling, crosslinking, supplemental copolymerization reaction, aging, etc. The curing treatment referred to herein also encompasses, for instance, a process (heating process, etc.) simply to allow a PSA composition containing a solvent to dry, a process simply to cool down (solidify) a heat-melted PSAcomposition. When the curing treatment comprises two or more processes (e.g. drying and crosslinking), these processes may be performed at once or stepwise.

The PSA composition can be applied with a commonly-used coater such as a gravure coater, reverse roll coater, kiss roll coater, dip roll coater, bar coater, knife coater, spray coater and the like. From the standpoint of accelerating the crosslinking reaction and increasing the productivity, etc., the PSA composition is preferably dried with heating. Depending on the type of support to which the PSA composition is applied, for example, the drying temperature can be around 40 °C to 150 °C. After dried, it may be subjected to an aging process of storing it around 40 °C to 60 °C so as to further accelerate the crosslinking reaction. The aging time may be suitably selected according to the desirable crosslinking degree and the rate at which the crosslinking reaction proceeds. It can be, for example, about 12 hours to 120 hours.

The PSA layer is typically formed continuously over the entire area of a surface of the substrate. Depending on the purpose and application, it may be formed in a regular or random pattern of dots, stripes, etc. From the standpoint of preventing the entering of rain, the PSA layer provided is preferably in a continuous phase at least in the respective margins of the edge piece and center piece. From the standpoint of producing higher protective performance, at least in the edge piece, the PSA layer is preferably formed in a continuous phase over the entire range of one surface of its substrate. The edge piece and center piece are preferably constructed, each having a PSA layer formed in a continuous phase over the entire range of one surface of the substrate.

The thickness of the PSA layer is not particularly limited. For instance, it can be about 1 $\mu$m to 50 $\mu$m, or it is usually suitably about 1 $\mu$m to 30 $\mu$m. From the standpoint of the transparency and water-draining capability, the thickness of the PSA layer is preferably smaller than 20 $\mu$m, or more preferably 10 $\mu$m or smaller. This can bring about good water-draining capability even when the PSA layer does not include purposely-formed surface contours (grooves, etc.) and is highly smooth on the surface (e.g. when the PSA layer surface has an arithmetic average roughness (Ra) of 1.0 $\mu$m or smaller). A glass protective PSA sheet comprising a PSA layer with a highly smooth surface free of purposely-formed surface contours is preferable because greater visibility can be ensured in an automobile having a glass window to which the PSA sheet is adhered. From the standpoint of obtaining greater water-draining capability, the thickness of the PSA layer is more preferably smaller than 10 $\mu$m, or particularly preferably smaller than 5 $\mu$m.

The thickness of a PSA layer can be determined by arithmetically averaging measurement values at five points taken with a 1/10000 dial gauge. More specifically, it can be determined as follows: the overall thickness (combined thickness of the PSA layer and substrate) of the PSA sheet is measured at five points with a 1/10000 dial gauge; the thickness of the substrate constituting the PSA sheet is measured at five points with a 1/10000 gauge; and from the arithmetic average value of the measurement values of the first, the arithmetic average value of the measurement values of the second is subtracted.

The PSA sheet used in the glass protective PSA sheet application method disclosed herein can be prepared, for instance, by obtaining a PSA sheet in a certain general shape (or a continuous PSA sheet, hereinafter) and cutting out the continuous PSA sheet into the shapes of the edge piece and center piece. The continuous PSA sheet is typically a long, broad sheet. For instance, it can be obtained in a wound roll. From this roll, the continuous PSA sheet is withdrawn and punched or cut out into the shapes of the edge piece and center piece. The continuous PSA sheet can be cut to a manageable size, and from this, the edge piece and center piece can be cut out. The manageable size can be, for instance, a size from which a set of center and edge pieces used for protecting a single glass window can be cut out.

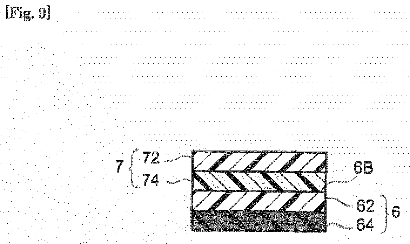

For instance, as shown in Fig. 9, the PSA sheet used in the glass protective PSA sheet application method disclosed herein can be used in the application method in a form of a PSA sheet backed with an application sheet, wherein another PSA sheet (application sheet) 7 is adhered to the back face 6B of PSA sheet 6 shown in Fig. 8. Application sheet 7 comprises a substrate 72 and a PSA layer 74 provided on one face thereof. The surface of the PSA layer 74 is applied to the back face 6B of PSA sheet 6 in a manner that it can be removed from the back face 6B. Application sheet 7 is typically laid over the entire range of back face 6B of PSA sheet 6. For instance, an application sheet-backed PSA sheet of such a construction can be preferably prepared from a continuous PSA sheet having an application sheet layered on the back face thereof, by punching out the shapes of the edge piece and center piece along with the application sheet.

Such an application sheet-backed PSA sheet provides great handling properties since application sheet 7 enhances the shape stability of PSA sheet 6. This may advantageously contribute to increase the workability. The application sheet-backed PSA sheet can be preferably used in an embodiment wherein stress is applied to the back face of application sheet 7 to press-bond PSA layer 64 of PSA sheet 6 to an adherend, and subsequently, application sheet 7 is removed from the back face 6B while leaving the PSA sheet 6 on the adherend surface. According to such an embodiment, when applying the application sheet-backed PSA sheet, the back face of PSA sheet 6 is covered with application sheet 7; and therefore, the stress can be firmly applied to the back face of application sheet 7 while preventing the occurrence of local stretching, etc., in PSA sheet 6. This may facilitate properly applying PSA sheet 6 to the adherend. Applying PSA sheet 6 in the form of application sheet-backed PSA sheet is advantageous also from the standpoint of preventing substrate 62 of PSA sheet 6 from getting scratched by the stress during the application. By peeling (removing) application sheet 7 after the PSA sheet 6 is applied, the transparency can be increased in the glass window to which PSA sheet 6 is applied.

For instance, in the first embodiment described earlier, when applying edge piece 2 and center piece 4 both in the form of application sheet-backed PSA sheet, favorably, after edge piece 2 is applied, the application sheet is removed from the back face of edge piece 2 before applying center piece 4.

Prior to application to a glass window, the edge piece and center piece used in the glass protective PSA sheet application method disclosed herein may be in such a form that a release liner is placed on its PSA layer surface. According to a PSA sheet in such a form (a release linerlined PSA sheet), the edge piece and center piece can be efficiently cut out from the continuous PSA sheet. It is also preferable from the standpoint that it allows compact storage of the edge piece and center piece until use. The edge piece and center piece prepared as the release liner lined PSA sheet are then subjected to removal of the release liner to expose their adhesive faces and used by press-bonding the adhesive faces to an adherend.

As the release liner, various types of paper (possibly with a resin-laminated surface), plastic film, etc., can be used without particular limitations. When a plastic film is used as the release liner, preferable examples of the resin component constituting the plastic film include a polyolefin resin, polyester resin (PET, etc.), polyamide resin, polycarbonate resin, polyurethane resin, etc. The plastic film may be formed of a resin material comprising a single species of such resin or of a resin material in which two or more species of resin (e.g. PE and PP) are blended. The plastic film may have a single-layer structure, or two-layer or higher multi-layer structure. Such a plastic film used for release liners can be produced by suitably employing a general film-molding method, similarly to plastic film used for substrates.

The thickness of the release liner is not particularly limited. For instance, it can be about 5 $\mu$m to 500 $\mu$m (preferably about 10 $\mu$m to 200 $\mu$m, e.g. about 30 $\mu$m to 200 $\mu$m). The release face (the face placed in contact with the PSA layer surface) of the release liner may be subjected as necessary to a release treatment with a conventionally known release agent (e.g. general silicone-based, long chain alkyl-based, fluorine-based release agents, etc.). The back face of the release face may or may not be treated with a release agent, or may be subjected to a surface treatment other than a release treatment.

The glass protective PSA sheet application method disclosed herein can be preferably practiced in an embodiment using flat pieces as the PSA sheet used in the method (edge piece and center piece). In other words, it can be practiced in an embodiment where a flat (two-dimensional) PSA sheet is applied as is to a glass window, without molding (e.g. thermally molding) it into a three-dimensional shape to resemble the outer surface contours of the glass window. According to the art disclosed herein, by the combined use of the edge piece and center piece as the glass protective PSA sheet, without taking the time or effort to three-dimensionally mold the sheet in advance, these pieces can be properly applied to conform to the outer surface contours of a glass window. Thus, in addition to allowing efficient application, eliminating the necessity for thermal molding can effectively reduce the costs of applying the glass protective PSA sheet. It is preferable to allow the use of flat PSA sheet as is, also from the standpoint of the storability and portability of these pieces, etc. However, in overall perspective of the efficiency of application, protective performance, etc., in the glass protective PSA sheet application method disclosed herein, it is allowed to three-dimensionally mold part or the entirety of the edge piece or center piece in advance for application. Such an embodiment can be included in the scope of the technical idea disclosed herein.

In the glass protective PSA sheet application method disclosed herein, the PSA sheet can be applied by a technique in which water is placed between the adherend surface and the PSA layer during the application work. For instance, it is preferable to employ a technique in which water (water for application) is provided to the glass window surface and while press-bonding the PSA sheet to the glass window, the water for application is squeezed out of the application range of the PSA sheet. The use of such water for application can improve the sliding of the PSA layer against the adherend surface in the course of application. This can prevent or reduce wrinkles formed during the application of the PSA sheet and may facilitate proper application of the PSA sheet. The water used as the water for application is not particularly limited. For instance, any water such as tap water, ion-exchanged water, etc., can be used. For the use as the water for application, a suitable amount of surfactant can be added to such water. The water for application can be provided to the glass window surface or to the back face of the edge piece to which the center piece is applied.

The glass protective PSA sheet application method disclosed herein can be preferably practiced in an embodiment using a center piece having a haze value of 10 % or lower. A center piece satisfying the haze value has excellent transparency. In transporting an automobile by driving it while the automobile is in a state where the glass protective PSA sheet has been applied to its glass windows, the use of such a center piece can ensure proper visibility. The combined use of a center piece having a haze value of 10 % or lower and an edge piece having a haze value of 10 % or lower can ensure good visibility in wider sight. From the standpoint of obtaining yet greater visibility, the haze values (%) of the center piece and edge piece are, individually, preferably 7 % or lower, more preferably 5 % or lower, or yet more preferably 3 % or lower. The colors of the center piece or edge piece is not particularly limited. For instance, it can be a colored transparent sheet or a colorless transparent sheet, satisfying the haze value of 10 % or lower.

The term "haze value (%)" herein refers to the ratio of diffused light transmittance to total light transmittance when the film or sheet of interest is irradiated with visible lights. It is also called cloudiness value. The haze value (%) can be represented by an equation below. Herein, Th is the haze value (%), Td is the diffused light transmittance, Tt is the total light transmittance.

$$Th\ (\%) = Td/Tt \times 100$$

Although not particularly limited to, a preferable center piece has a thermal expansion (HE(60-10)) between 60 °C and 10 °C of 2.0 % or lower. The thermal expansion (HE(60-10)) of a center piece can be measured by the following method.

[Measurement of Thermal Expansion (HE(60-10))]

With the machine direction (MD) of a center piece being the longitudinal direction (length direction), a 200 mm long by 200 mm wide square measurement sample is obtained. The measurement sample is left standing in an environment at 23 °C and 50 % RH for one hour and then marked with lines spaced at an about 150 mm interval.

The measurement sample is stored in a drying oven at 60 °C for one hour. After this, in the environment at 60 °C, the length between the lines is measured with calipers to the first decimal place.

Subsequently, the sample is stored in an environment at 10 °C for one hour. After this, in the environment at 10 °C, the length between the lines is measured with calipers to the first decimal place.

With $L_{60}$ being the length of the inter-line space (interval) measured in the environment at 60 °C and $L_{10}$ being the length of the inter-line space measured in the environment at 10 °C, the thermal expansion (HE(60-10)) is determined by the following equation:

$$HE(60\text{-}10)\ (\%) = |(L_{60} - L_{10})/L_{60}| \times 100$$

Herein, the machine direction (MD) of the center piece refers to the direction corresponding to the machine direction of the substrate (typically a plastic film substrate) constituting the center sheet.

A glass protective PSA sheet adhered on an automobile may be exposed to a wide range of temperature changes as the automobile is stored outdoor for a long period, and so on. A center piece having a small thermal expansion (HE(60-10)) undergoes little expansion or contraction associated with temperature changes and thus is likely to prevent post-application lifting and wrinkling. This is preferable from the standpoint of resisting aging and temperature changes to maintain good adhesion.

From such a standpoint, the thermal expansion (HE(60-10)) of the center piece is more preferably 1.7 % or lower, or yet more preferably 1.5 % or lower (e.g. 1.3 % or lower). The lower limit of thermal expansion (HE(60-10)) is not particularly limited. For instance, the thermal expansion (HE(60-10)) is preferably higher than 0.5 %, or more preferably 0.7 % or higher.

The thermal expansion (HE(60-10)) of the center piece can be preferably applied to the thermal expansion (HE(60-10)) of the edge piece as well. It is particularly preferable that both the edge piece and center piece satisfy the condition of thermal expansion (HE(60-10)).

When it is difficult to determine the MD of a center piece, as for the MD in the respective measurements and tests disclosed herein, the direction (MD') specified by the following method can be used for convenience.

In particular, a center piece is left standing in an environment at 23 °C and 50 % RH for one hour; and then, with an arbitrary direction in the center piece being assigned as the first direction and the direction orthogonally intersecting the first direction being assigned as the second direction, a 200 mm long by 200 mm wide square measurement sample is cut out with the first direction being its longitudinal (length) direction and the second direction being its latitudinal direction (width direction). The measurement sample is marked in the first direction with a pair of lines spaced at an about 150 mm interval and also marked in the second direction with a pair of lines spaced at about 150 mm interval. The line marking should be completed within five minutes after the measurement sample is cut out.

From the center piece after left standing in the environment at 23 °C and 50 % RH for one hour or more, a 200 mm long by 200 mm wide square measurement sample is cut out with the third and fourth directions each forming 45° angles with the first and second directions being assigned as the length direction and width direction, respectively. The measurement sample is marked in the third direction with a pair of lines spaced at an about 150 mm interval and further marked in the fourth direction with a pair of lines spaced at about 150 mm interval. The line marking should be completed within five minutes after the measurement sample is cut out.

The measurement sample with the marked lines is stored in a drying oven at 80 °C for one hour. After this, in the environment at 80 °C, the length between the marked lines is measured with calipers to the first decimal place. Subsequently, the measurement sample is stored in an environment at 23 °C for one hour. Then, in the environment at 23 °C, the length between the marked lines is measured with calipers to the first decimal place.

With $L_{80}$ being the length of the inter-line space measured in the environment at 80 °C and $L_{23}$ being the length of the inter-line space measured in the environment at 23 °C, with respect to each of the first, second, third and fourth directions, the thermal expansion (HE(80-23)) between 80 °C and 23 °C is determined by the following equation:

$$\text{Thermal expansion (HE(80-23)) (\%)} = |(L_{80} - L_{23})/L_{80}| \times 100$$

; and the direction with the largest value is assigned as the MD'.

The value obtained using a measurement sample in which the MD' thus specified is assigned as the length direction by the aforementioned thermal expansion (HE(60-10)) measurement is used as an approximate value of the value of thermal expansion (HE(60-10)) obtained using a measurement sample with its MD being assigned as the length direction. In a preferable center piece, the approximate value is 2.0 % or lower (more preferably 1.7 % or lower, yet more preferably 1.5 % or lower, e.g. 1.3 % or lower). In a preferable center piece, the approximate value is higher than 0.5 % (more preferably 0.7 % or higher).

Although not particularly limited to, a preferable center piece has a tensile modulus at 23 °C (or simply a tensile modulus, hereinafter) of 1800 N/mm$^2$ or lower. It is noted that the tensile modulus of the PSA layer constituting the glass protective PSA sheet (e.g. the center piece) disclosed herein is extremely small as compared with the tensile modulus of the substrate constituting the PSA sheet. Thus, for the tensile modulus referred to herein, the value converted to per cross-sectional surface area of the substrate is used. The tensile modulus of a center piece can be measured by the next method.

[Measurement of Tensile Modulus]

With the MD of center piece being the length direction, a 25 mm wide by 50 mm long rectangular measurement sample is obtained. Based on JIS K7127, at room temperature (23 °C), using a precision universal tester Autograph AC-IS (available from Shimadzu Corporation), the measurement sample is elongated at a tensile speed of 300 mm/min and the maximum slope is determined. The measurement is conducted twice and their average value is used as the value of tensile modulus.

With decreasing tensile modulus of the center piece, the center piece tends to be more susceptible to deformation conforming to a curved surface (have greater curved surface-conformability). This may facilitate making the center piece to conform to the surface contours of a glass window to yield proper application. From such a standpoint, the tensile modulus of center piece is more preferably 1500 N/mm$^2$ or lower, or yet more preferably 1300 N/mm$^2$ or lower. The lower limit of tensile modulus is not particularly limited. From the standpoint of readily bringing about the preferable thermal expansion (HE(60-10)) described above at the same time, it is usually suitably 400 N/mm$^2$ or higher, preferably 500 N/mm$^2$ or higher, or more preferably 600 N/mm$^2$ or higher. With a higher tensile modulus of the center piece, post-application lifting and wrinkling tends to be more readily prevented.

The tensile modulus of the centerpiece described above can be preferably applied to the tensile modulus of the edge piece as well. It is particularly preferable that each of the edge piece and center piece satisfies the tensile modulus.

In the tensile modulus measurement, when it is difficult to determine the MD of a center piece, the tensile modulus measurement is carried out, using a measurement sample in which the MD' specified by the aforementioned method is assigned as the length direction; and the result can be used as an approximate value of the MD tensile modulus of the center piece. In a preferable center piece, the approximate value satisfies the aforementioned preferable tensile modulus. The same applies to the 5 % modulus described later.

Although not particularly limited to, a preferable center piece has a tensile modulus at 5 % elongation at 23 °C (or abbreviated to a 5 % modulus, hereinafter) in a range of 7 N/20mm to 30 N/20mm. Such a center piece may have well-balanced curved surface conformability and handling properties and may be easily made to conform to the surface contours of a glass window to allow proper application. From such a standpoint, the 5 % modulus of center piece is preferably in a range of 7 N/20mm to 25 N/20mm, or more preferably in a range of 8 N/20mm to 20 N/20mm. The 5 % modulus of center piece can be measured by the following method.

[5 % Modulus [Measurement]

With the MD of a center piece being the length direction, a 20 mm wide by 130 mm long strip of measurement sample is obtained. The measurement sample is set in a precision universal tester Autograph AG-IS (available from Shimadzu Corporation) and, at room temperature (23 °C), subjected to a tensile test at a tensile speed of 300 mm/min at a chuck distance of 50 mm to obtain a stress-distortion curve. The stress value at 5 % elongation of the 20 mm wide measurement sample is used as the 5 % modulus at 23 °C.

The 5 % modulus of the center piece can be preferably applied to the 5 % modulus of the edge piece as well. It is particularly preferable that each of the edge piece and center piece satisfies the 5 % modulus.

The glass protective PSA sheet application method disclosed herein can be practiced in an embodiment using PSA sheet pieces that are identical other than possible differences in external shape for the edge piece and center piece constituting the glass protective PSA sheet. According to such an embodiment, by punching out one type of PSA sheet formed in a general shape as described above, the edge piece and center piece can be prepared. Alternatively, as the edge piece and center piece, PSA sheets having different construction and material components can be used. In this case, the edge piece and center piece may differ, for instance, in substrate composition and thickness, PSA layer composition and thickness, formation range of PSA layer, etc.

The glass protective PSA sheet application method disclosed herein may be applied to glass windows in the respective parts of an automobile. For example, besides being preferably applied to front and rear windshields as in the first to third embodiments described above, it may be applied to side windshields, quarter windshields, stationary windshields, etc. A preferable object of application is a front windshield. This is because since a front windshield has a large surface area among glass windows in an automobile, it has higher probability of getting hit by a small stone, etc.; it also requires durability against peeling and kinking even if the wiper is operated; and further, it readily comes in the sight of a user of the automobile and has a significant impact on the product value. Moreover, in a passenger vehicle, because of the highly designed features as compared with a bus or truck in general, a glass window therein tends to be greatly curved. Accordingly, the glass protective PSA sheet application method disclosed herein can be particularly preferably applied to a glass window in a passenger vehicle.

[Reference Signs List]

 1, 30, 40 glass protective PSA sheets
 2, 32, 42 edge pieces
 2A right edge piece
 2B left edge piece
 2C upper edge piece
 4, 34, 44 center pieces
 4A1 first projection
 4A2 second projection
 4A3 third projection
 4A6 first indentation
 4A7 second indentation

4B6, 4C6, 4D6 indentations
4E projection
10 automobile
12 window molding
20 front windshield (automobile glass window)
20A outer surface
22 periphery
24 central area
26 edges
26A right side
26B left side
26C upper side
26D lower side
6 PSA sheet
62 substrate
64 PSA layer
7 application sheet
72 substrate
74 PSA layer
80 wiper (right wiper)
86 blade
90 wiper (left wiper)
96 blade
320 rear windshield (automobile glass window)

**Claims**

1. A method for applying a glass protective pressure-sensitive adhesive sheet to an outer surface of an automobile glass window (20, 320),
   **characterized by**
   a step of obtaining an edge sheet piece (2, 32, 42) and a center sheet piece (4, 34, 44) as the glass protective pressure-sensitive adhesive sheet (1, 30, 40);
   a step of applying the edge sheet piece (2, 32, 42) to a periphery (22) of the automobile glass window (20, 320), the periphery (22) being a frame-shaped area along edges (26) of the automobile glass window (20, 320); and
   a step of applying the center sheet piece (4, 34, 44) over the edge sheet piece (2, 32, 42);
   wherein, in the step of applying the center sheet piece (4. 34. 44), outer margins of the center sheet piece (4, 34, 44) are laid over inner margins of the edge sheet piece (2, 32, 42).

2. The glass protective pressure-sensitive adhesive sheet application method according to Claim 1, wherein the center sheet piece (4, 34, 44) has a surface area equivalent to 95 % or less of the surface area of the outer surface of the automobile glass window (20, 320).

3. The glass protective pressure-sensitive adhesive sheet application method according to Claim 1 or 2, wherein the edge sheet piece (2, 32, 42) has a width of 300 mm or smaller.

4. The glass protective pressure-sensitive adhesive sheet application method according to any one of Claims 1 to 3, wherein the center sheet piece (4, 34, 44) is provided with a projection where the center sheet piece's outline partially projects outwards to a lateral side of the glass window.

5. The glass protective pressure-sensitive adhesive sheet application method according to any one of Claims 1 to 4, wherein the center sheet piece (4, 34, 44) is provided with two or more projections spaced at an interval where the center sheet piece's (4, 34, 44) outline partially projects outwards to a lateral side of the glass window (20, 320).

6. The glass protective pressure-sensitive adhesive sheet application method according to Claim 5, wherein the center sheet piece (4, 34, 44) is provided with an indentation having a depth of 50 mm or greater between two adjacent ones of the projections.

EP 2 960 166 B1

7. The glass protective pressure-sensitive adhesive sheet application method according to any one of Claims 4 to 6, wherein
the automobile comprises a wiper (80, 90) to wipe a surface of the glass window (20, 320),
the wiper has a blade (86, 96) that moves back and forth along the surface of the glass window (20, 320) in a prescribed wiping area,
in the step of applying the center sheet piece (4, 34, 44), the center sheet piece (4, 34, 44) is applied so that at a position where the blade (86, 96) comes closest to the lateral side of the glass window, the blade is placed to intersect the projection.

8. The glass protective pressure-sensitive adhesive sheet application method according to any one of Claims 1 to 7, wherein
the automobile comprises a wiper (80, 90) to wipe a surface of the glass window (20, 320),
the wiper has a blade (86, 96) that moves back an forth along the surface of the glass window (20, 320) in a prescribed wiping area,
in the step of applying the center sheet piece (4, 34, 44), the center sheet piece (4, 34, 44) is applied so that the blade (86, 96) is always at least partially placed on the center sheet piece (4, 34, 44) in the wiping area.

9. The glass protective pressure-sensitive adhesive sheet application method according to any one of Claims 1 to 8, wherein the center sheet piece (4, 34, 44) has a haze value of 10 % or lower.

10. An automobile glass window (20, 320) having a glass protective pressure-sensitive adhesive sheet applied to an outer surface,
**characterized in that**
the glass protective pressure-sensitive adhesive sheet comprises an edge sheet piece (2, 32, 42) and a center sheet piece (4, 34, 44),
the edge sheet piece (2, 32, 42) is applied to a periphery (22) of the automobile glass window (20, 320), the periphery (22) being a frame-shaped area along edges (26) of the automobile glass window (20, 320),
the center sheet piece (4, 34, 44) is applied over the edge sheet piece (2, 32, 42), and
outer margins of the center sheet piece (4, 34, 44) are laid over inner margins of the edge sheet piece (2, 32, 42).


**Patentansprüche**

1. Verfahren zum Auftragen einer glasschützenden, druckempfindlichen Klebefolie auf eine Außenfläche eines Kraftfahrzeug-Glasfensters (20, 320),
**gekennzeichnet durch**:

   einen Schritt zum Erhalten eines seitlichen Folienteils (2, 32, 42) und eines mittleren Folienteils (4, 34, 44) als der glasschützenden, druckempfindlichen Klebefolie (1, 30, 40),
   einen Schritt zum Auftragen des seitlichen Folienteils (2, 32, 42) auf eine Peripherie (22) des Kraftfahrzeug-Glasfensters (20, 320), wobei die Peripherie (22) ein rahmenförmiger Bereich entlang der Ränder (26) des Kraftfahrzeug-Glasfensters (20, 320) ist, und
   einen Schritt zum Auftragen des mittleren Folienteils (4, 34, 44) über dem seitlichen Folienteil (2, 32, 42), wobei in dem Schritt zum Auftragen des mittleren Folienteils (4, 34, 44) äußere Ränder des mittleren Folienteils (4, 34, 44) über innere Ränder des seitlichen Folienteils (2, 32, 42) gelegt werden.

2. Verfahren zum Auftragen einer glasschützenden, druckempfindlichen Klebefolie nach Anspruch 1, wobei der mittlere Folienteil (4, 34, 44) eine Flächengröße in Entsprechung zu 95% oder weniger der Flächengröße der Außenfläche des Kraftfahrzeug-Glasfensters (20, 320) aufweist.

3. Verfahren zum Auftragen einer glasschützenden, druckempfindlichen Klebefolie nach Anspruch 1 oder 2, wobei der seitliche Folienteil (2, 32, 42) eine Breite von 300 mm oder weniger aufweist.

4. Verfahren zum Auftragen einer glasschützenden, druckempfindlichen Klebefolie nach einem der Ansprüche 1 bis 3, wobei der mittlere Folienteil (4, 34, 44) mit einem Vorsprung versehen ist, wobei der Umriss des mittleren Folienteils teilweise nach außen zu einer lateralen Seite des Glasfensters vorsteht.

5. Verfahren zum Auftragen einer glasschützenden, druckempfindlichen Klebefolie nach einem der Ansprüche 1 bis 4, wobei der mittlere Folienteil (4, 34, 44) mit zwei oder mehr Vorsprüngen versehen ist, die mit einem Abstand angeordnet sind, wobei der Umriss des mittleren Folienteils (4, 34, 44) teilweise nach außen zu einer lateralen Seite des Glasfensters (20, 320) vorsteht.

6. Verfahren zum Auftragen einer glasschützenden, druckempfindlichen Klebefolie nach Anspruch 5, wobei der mittlere Folienteil (4, 34, 44) mit einer Vertiefung mit einer Tiefe von 50 mm oder mehr zwischen zwei benachbarten Vorsprüngen versehen ist.

7. Verfahren zum Auftragen einer glasschützenden, druckempfindlichen Klebefolie nach einem der Ansprüche 4 bis 6, wobei:

   das Kraftfahrzeug einen Scheibenwischer (80, 90) zum Wischen einer Oberfläche des Glasfensters (20, 320) umfasst,
   der Scheibenwischer eine Klinge (86, 96) aufweist, die sich nach vorne und nach hinten entlang der Oberfläche des Glasfensters (20, 320) in einem vorbestimmten Wischbereich bewegt, und
   in dem Schritt zum Auftragen des mittleren Folienteils (4, 34, 44) der mittlere Folienteil (4, 34, 44) derart aufgetragen wird, dass an einer Position, wo die Klinge (86, 96) der lateralen Seite des Glasfensters am nächsten kommt, die Klinge den Vorsprung kreuzend platziert ist.

8. Verfahren zum Auftragen einer glasschützenden, druckempfindlichen Klebefolie nach einem der Ansprüche 1 bis 7, wobei:

   das Kraftfahrzeug einen Scheibenwischer (80, 90) zum Wischen einer Oberfläche des Glasfensters (20, 320) umfasst,
   der Scheibenwischer eine Klinge (86, 96) aufweist, die sich nach vorne und nach hinten entlang der Oberfläche des Glasfensters (20, 320) in einem vorbestimmten Wischbereich bewegt, und
   in dem Schritt zum Auftragen des mittleren Folienteils (4, 34, 44) der mittlere Folienteil (4, 34, 44) derart aufgetragen wird, dass die Klinge (86, 96) immer wenigstens teilweise an dem mittleren Folienteil (4, 34, 44) in dem Wischbereich platziert ist.

9. Verfahren zum Auftragen einer glasschützenden, druckempfindlichen Klebefolie nach einem der Ansprüche 1 bis 8, wobei der mittlere Folienteil (4, 34, 44) einen Haze-Wert von 10% oder weniger aufweist.

10. Kraftfahrzeug-Glasfenster (20, 320) mit einer auf eine Außenfläche aufgetragenen glasschützenden, druckempfindlichen Klebefolie,
    **dadurch gekennzeichnet, dass**:

    die glasschützende, druckempfindliche Klebefolie einen seitlichen Folienteil (2, 32, 42) und einen mittleren Folienteil (4, 34, 44) umfasst,
    der seitliche Folienteil (2, 32, 42) auf eine Peripherie (22) des Kraftfahrzeug-Glasfensters (20, 320) aufgetragen ist, wobei die Peripherie (22) ein rahmenförmiger Bereich entlang der Ränder (26) des Kraftfahrzeug-Glasfensters (20, 320) ist,
    der mittlere Folienteil (4, 34, 44) über dem seitlichen Folienteil (2, 32, 42) aufgetragen ist, und
    äußere Ränder des mittleren Folienteils (4, 34, 44) über innere Ränder des seitlichen Folienteils (2, 32, 42) gelegt sind.

## Revendications

1. Procédé d'application d'une feuille adhésive sensible à la pression pour la protection du verre sur la surface externe d'une fenêtre en verre (20, 320) d'automobile,
   **caractérisé par**
   une étape de récupération d'un fragment de feuille de bord (2, 32, 42) et d'un fragment de feuille centrale (4, 34, 44) en tant que feuille adhésive sensible à la pression pour la protection du verre (1, 30, 40),
   une étape d'application du fragment de feuille de bord (2, 32, 42) sur la périphérie (22) de la fenêtre en verre (20, 320) d'automobile, la périphérie (22) étant une zone en forme de cadre le long des bords (26) de la fenêtre en verre (20, 320) d'automobile, et
   une étape d'application du fragment de feuille centrale (4, 34, 44) sur le fragment de feuille de bord (2, 32, 42),

dans lequel, dans l'étape d'application du fragment de feuille centrale (4, 34, 44), les marges externes du fragment de feuille centrale (4, 34, 44) sont posées sur les marges internes du fragment de feuille de bord (2, 32, 42).

2. Procédé d'application d'une feuille adhésive sensible à la pression pour la protection du verre selon la revendication 1, dans lequel le fragment de feuille centrale (4, 34, 44) présente une surface équivalent à 95 % ou moins de la surface externe de la fenêtre en verre (20, 320) d'automobile.

3. Procédé d'application d'une feuille adhésive sensible à la pression pour la protection du verre selon la revendication 1 ou la revendication 2, dans lequel le fragment de feuille de bord (2, 32, 42) présente une largeur de 300 mm ou inférieur.

4. Procédé d'application d'une feuille adhésive sensible à la pression pour la protection du verre selon l'une quelconque des revendications 1 à 3, dans lequel le fragment de feuille centrale (4, 34, 44) est muni d'une protubérance où le contour du fragment de feuille centrale dépasse partiellement à l'extérieur vers un côté latéral de la fenêtre en verre.

5. Procédé d'application d'une feuille adhésive sensible à la pression pour la protection du verre selon l'une quelconque des revendications 1 à 4, dans lequel le fragment de feuille centrale (4, 34, 44) est muni de deux protubérances ou plus espacées à un intervalle où le contour du fragment de feuille centrale dépasse partiellement à l'extérieur vers un côté latéral de la fenêtre en verre (20, 320).

6. Procédé d'application d'une feuille adhésive sensible à la pression pour la protection du verre selon la revendication 5, dans lequel le fragment de feuille centrale (4, 34, 44) est muni d'un retrait présentant une profondeur de 50 mm ou supérieur entre deux protubérances adjacentes parmi les protubérances.

7. Procédé d'application d'une feuille adhésive sensible à la pression pour la protection du verre selon l'une quelconque des revendications 4 à 6, dans lequel
l'automobile comprend un essuie-glace (80, 90) permettant d'essuyer la surface de la fenêtre en verre (20, 320), l'essuie-glace possède une lame (86, 96) qui se déplace d'avant en arrière le long de la surface de la fenêtre en verre (20, 320) dans une zone d'essuyage prescrite,
lors de l'étape d'application du fragment de feuille centrale (4, 34, 44), le fragment de feuille centrale (4, 34, 44) est appliqué à une position définie de sorte à ce que la lame (86, 96) devienne la plus proche du côté latéral de la fenêtre en verre, la lame étant placée pour couper la protubérance.

8. Procédé d'application d'une feuille adhésive sensible à la pression pour la protection du verre selon l'une quelconque des revendications 1 à 7, dans lequel
l'automobile comprend un essuie-glace (80, 90) permettant d'essuyer la surface de la fenêtre en verre (20, 320), l'essuie-glace possède une lame (86, 96) qui se déplace d'avant en arrière le long de la surface de la fenêtre en verre (20, 320) dans une zone d'essuyage prescrite,
lors de l'étape d'application du fragment de feuille centrale (4, 34, 44), le fragment de feuille centrale (4, 34, 44) est appliqué à une position définie de sorte à ce que la lame (86, 96) soit toujours au moins partiellement placée sur le fragment de feuille centrale (4, 34, 44) dans la zone d'essuyage.

9. Procédé d'application d'une feuille adhésive sensible à la pression pour la protection du verre selon l'une quelconque des revendications 1 à 8, dans lequel le fragment de feuille centrale (4, 34, 44) présente une valeur de diffusion de 10 % ou inférieure.

10. Fenêtre en verre (20, 320) d'automobile comportant une feuille adhésive sensible à la pression pour la protection du verre appliquée sur la surface externe,
**caractérisée en ce que**
la feuille adhésive sensible à la pression pour la protection du verre comprend un fragment de feuille de bord (2, 32, 42) et un fragment de feuille centrale (4, 34, 44),
le fragment de feuille de bord (2, 32, 42) est appliqué sur la périphérie (22) de la fenêtre en verre (20, 320) d'automobile, la périphérie (22) étant une zone en forme de cadre le long des bords (26) de la fenêtre en verre (20, 320) d'automobile,
le fragment de feuille centrale (4, 34, 44) est appliqué sur le fragment de feuille de bord (2, 32, 42), et
les marges externes du fragment de feuille centrale (4, 34, 44) sont posées sur les marges internes du fragment de feuille de bord (2, 32, 42).

[Fig. 1]

[Fig. 2]

EP 2 960 166 B1

[Fig. 3]

[Fig. 4]

26

[Fig. 5]

[Fig. 6]

[Fig. 7]

[Fig. 8]

[Fig. 9]

**REFERENCES CITED IN THE DESCRIPTION**

**Patent documents cited in the description**

- JP 2013098876 A
- WO 9928400 A1
- JP 407081959 A
- JP 2007084795 A
- JP 2007246589 A
- JP 2010121044 A